# FASCICULE DE BREVET EUROPEEN

(11) **EP 1 527 105 B1**
(45) Date de publication et mention de la délivrance du brevet: **25.02.2009**
(21) Numéro de dépôt: 03750830.6
(22) Date de dépôt: 21.07.2003
(51) Int. Cl.: C08F 4/00

(54) **SYNTHESE DE MICROGELS STATISTIQUES PAR POLYMERISATION RADICALAIRE CONTROLEE**
SYNTHESE VON STATISTISCHEN MIKROGELEN DURCH KONTROLLIERTE RADIKALPOLYMERISATION
SYNTHESIS OF STATISTICAL MICROGELS BY MEANS OF CONTROLLED RADICAL POLYMERISATION

(30) Priorité: 06.08.2002 FR 0209987
(43) Date de publication de la demande: 04.05.2005
(73) Titulaire: RHODIA CHIMIE, 92512 Boulogne Billancourt Cedex (FR)
(72) Inventeur: DESTARAC, Mathias, F-75005 Paris (FR); BAVOUZET, Bruno, F-94250 Gentilly (FR); TATON, Daniel, F-33750 Camarsac (FR)
(74) Mandataire: Delenne, Marc
(86) Numéro de dépôt international: PCT/FR2003/002303
(87) Numéro de publication internationale: WO 2004/014535

(56) Documents cités:
- WO-A-98/01478
- WO-A-98/31739
- FR-A- 2 773 161

## Description

La présente invention concerne un nouveau procédé de polymérisation radicalaire donnant accès à des microgels statistiques et les microgels statistiques ainsi obtenus.

Les microgels statistiques représentent une classe particulière de polymères, considérée comme intermédiaire entre la famille des polymères ramifiés et celle des réseaux polymères macroscopiquement réticulés, appelés macrogels (Murray, M. J. and Snowden, M. J. Adv. Colloid Interface Sci. 1995, 54, 73). Ainsi, les microgels statistiques peuvent être définis comme étant un ensemble macroscopiquement soluble de macromolécules réticulées de manière intramoléculaire, présentant une structure globulaire de dimension colloïdale typiquement comprise entre 10 et 1000 nm (Funke, W. Adv. Polym. Sci. 1998, 136, 139) et de masse molaire de l'ordre de 10⁴ à 10⁶ g.mol⁻¹. D'autres termes parmi lesquels « microparticules », « hydrogels microsphériques », « nanoparticules », « particules latex », etc. ont été proposés pour décrire la structure des microgels statistiques.

Outre leur solubilité dans un solvant approprié, on peut citer entre autres avantages des microgels statistiques par rapport aux macrogels leur plus grande facilité de purification par des techniques classiques de précipitation.

Les microgels sont connus pour avoir de multiples propriétés, éventuellement différentes de celles des homopolymères linéaires et des macrogels correspondants. Par exemple, la viscosité en solution diluée d'un microgel est inférieure à celle d'un polymère équivalent de structure linéaire, et les films formés à partir d'un microgel statistique présentent de meilleures propriétés mécaniques sans que ne soient affectées les propriétés désirées comme par exemple la brillance ou la durabilité (Ishikura, S. and coll. Prog. Org. Coat. 1988, 15, 373).

Les microgels statistiques sont utilisés en tant qu'additifs pour diminuer la viscosité des formulations à base de solvant, ou en milieu fondu (processing aid), ou encore pour améliorer la résistance aux chocs des matériaux. Leur utilisation permet d'augmenter le taux d'extrait sec de ces formulations avec comme avantage la réduction des émissions de solvants et un maintien de la viscosité. Parmi les domaines d'applications concernés on peut citer les peintures, les puits de pétrole ou le traitement des eaux usés.

Les procédés de préparation de ces microgels statistiques peuvent être classés en plusieurs groupes. Le premier correspond à la copolymérisation en solution très diluée d'un mélange de monomères comprenant au moins un monomère réticulant (Staudinger, H. and Husemann, E. Chem. Ber. 1935, 68, 1618; Stôver, D. H. and coll. Macromolecules 2002, 35, 2728). Dans un tel cas, la dilution favorise les réactions de réticulation intramoléculaires au détriment des réaction de réticulation intermoléculaires qui elles, conduisent à la formation d'un macrogel insoluble et infusible. Il a également été proposé un procédé de copolymérisation radicalaire en solution mettant en jeu au moins un monomère réticulant en présence d'un agent de transfert de chaîne de type mercaptan de manière à éviter la formation du macrogel (Sherrington, DS. C. Polymer, 2000, 41).

La deuxième méthode de préparation des microgels statistiques consiste à copolymériser un mélange de monomères comprenant au moins un monomère réticulant en utilisant un procédé de polymérisation en émulsion (Antonietti, M. Angew. Chem. Int. Ed. 1988, 27, 1743). Dans ce cas, les réactions de réticulation intermoléculaires sont restreintes du fait de la compartimentation dans des micelles des macromolécules en formation.

Pour obtenir les chaînes polymères reliées entre elles par les points de ramification issus du (ou des) monomère(s) réticulant(s), on a généralement recours à la polymérisation radicalaire.

D'autres méthodes de préparation des microgels statistiques ont cependant été développées, notamment celle procédant par polymérisation ionique. Ainsi, l'addition du divinylbenzène utilisé comme agent de couplage à des chaînes de polystyrène dites « vivantes » préparées par polymérisation anionique en solution conduit-elle à un microgel statistique en forme d'étoile constitué d'un coeur réticulé et de bras polystyrène autour de la portion centrale (Rempp, P. et coll. Compt. Rend. Acad. Sci. 1966, 262, 726). De manière alternative, la polymérisation anionique en solution diluée du divinylbenzène conduit à un microgel porteur de sites carbanioniques à partir desquels on peut faire croître des chaînes de polystyrène pour obtenir un polymère en forme d'étoile (Eschwey, H. Burchard, W. Polymer, 1975, 16, 180). D'autres agents de couplage ont été utilisés pour obtenir des microgels statistiques par polymérisation anionique, notamment ceux à base de groupements chlorosilane (Antonietti, M. et coll. Macromolecules 1989, 22, 2802). Plus récemment, des microgels statistiques en forme d'étoile ont été préparés par polymérisation cationique «dite « vivante » (Higashimura, T. et coll. Macromolecules, 1996, 29, 1772).

Récemment, il a été proposé un procédé de synthèse de microgels statistiques en forme d'étoile, à partir du couplage de chaînes polymères linéaires préformées par polymérisation radicalaire contrôlée, avec un monomère multiéthyléniquement insaturé. Les techniques utilisées à cette fin peuvent mettre en jeu des agents de contrôle tels les nitroxyle utilisés comme contre-radicaux (T. Long, J Polym. Sci. Part A. : Polym. Chem. 2001, 39, 216), des complexes de métaux de transition utilisés dans la technologie *Atom Transfer Radical Polymerization* (ATRP) (Matyjaszewski, K. Macromolecules, 1999, 32, 4482) ou bien des agents porteurs de groupements thiocarbonyl thio comme les dithioesters dans un procédé d'addition fragmentation réversible (WO 00/0293). Dans ce cas, les groupements réactivables issus des précurseurs linéaires se trouvent au niveau du coeur des polymères en étoile ainsi formés.

Dans la suite de la description, les termes microgels statistiques de première génération et microgels statistiques de deuxième génération sont utilisés pour décrire, respectivement, des microgels statistiques constitués d'un polymère à extrémités de chaînes activables par terminaison ou par transfert réversible et, les produits constitués du microgel statistique de première génération au coeur et de bras polymères s'étendant à partir des extrémités de chaînes activables de ladite portion centrale.

De plus, les termes « polymère à extrémités de chaînes activables » incluent tout polymère contenant un (ou plusieurs) groupement(s) halogéné(s) ou pseudo-halogéné(s) obtenu par ARTP, ainsi que tout polymère porteur d'un groupement thiocarbonyl thio (dithiocarbamate, dithiocarbonate, trithiocarbonate, dithioester, thioether-thione, dithiocarbazate) en bout de chaîne, obtenu par un procédé d'addition-fragmentation réversible.

A titre d'exemple illustratif du procédé ATRP, citons le brevet WO96/30421. Les demandes de brevets WO 98/01478 au nom de Dupont de Nemours et WO 99/35178 au nom de Rhodia Chimie décrivent l'utilisation d'agents de contrôle (ou de transfert réversible) par addition-fragmentation de type dithioester RSC=SR' pour la synthèse de copolymères à architecture contrôlée. Une autre famille d'agents de contrôle, les xanthates RSC=SOR', a été décrite dans les demandes de brevets WO 98/58974, WO 00/75207 et WO 01/42312 de la société Rhodia Chimie comme précurseurs de copolymères à blocs. Le contrôle de la polymérisation radicalaire par des dithiocarbamates RS(C=S)NR₁R₂ a également été récemment décrit dans les demandes de brevets WO 99/35177 au nom de Rhodia et WO 99/31144 au nom de Dupont de Nemours. Egalement, les composés thioether-thiones ont été décrits en tant qu'agents de contrôle en polymérisation radicalaire, dans la demande de brevet FR2794464 déposée au nom de la société Rhodia Chimie. Egalement, les composés dithiocarbazates ont été décrits en tant qu'agents de contrôle en polymérisation radicalaire, dans la demande de brevet WO 02/26836 déposée au nom de la société SYMYK.

Il a été décrit un procédé de préparation de microgels statistiques par la voie radicalaire contrôlée employant des radicaux nitroxyle comme agent de contrôle pour la copolymérisation du tertbutylstyrène et du divinylbenzène. (Solomon, Polymer 2001, 42, 5987 et WO 98/31739). Toutefois, cette méthode est limitée à la famille des monomères styréniques et nécessite par ailleurs des températures de polymérisation relativement élevées (110 à 130°C).

Un but de la présente invention est donc de proposer un nouveau procédé de synthèse de microgels par voie radicalaire contrôlée qui ne présente pas les inconvénients ou les limitations des procédés de synthèse des microgels statistiques proposés jusque là.

Un autre but de l'invention est de proposer un procédé de synthèse de microgels statistiques de première génération au cours duquel on peut faire varier le taux de ramification, les masses molaires moyennes en nombre et la densité de fonctions réactives en surface, par conséquent la forme et la taille desdits microgels statistiques.

Un autre but est de proposer un procédé de polymérisation radicalaire contrôlée qui est simple de mise en oeuvre et qui permet d'aboutir à des microgels statistiques de génération supérieure à partir des microgels statistiques de première génération.
Un autre but est de proposer un procédé qui permet d'accéder à des microgels statistiques de deuxième génération en forme d'étoile dont les branches comportent des groupements réactivables à leur extrémité. Ces groupements peuvent être avantageusement modifiés de manière à fonctionnaliser les bras des microgels statistiques en forme d'étoile.

Un autre but de l'invention est de proposer un procédé de synthèse de microgels statistiques de génération supérieure à la première au cours duquel on peut faire varier le taux de ramification, les masses molaires moyennes en nombre et la densité de fonctions réactives en surface, par conséquent la forme et la taille desdits microgels statistiques.

Un autre but est de proposer un procédé de polymérisation radicalaire contrôlée qui peut s'appliquer à une très vaste gamme de monomères, comparativement aux techniques connues de l'art antérieur.

Dans le cadre de la présente invention, la synthèse de microgels statistiques est effectuée en ayant recours au procédé ATRP ou au procédé mettant en jeu des agents de contrôle thiocarbonylthio ou thiophosphates opérant dans un procédé d'addition-fragmentation réversible.

Ces buts et d'autres sont atteints par la présente invention qui concerne tout d'abord un procédé de préparation de microgels statistiques dits de première génération qui comprend une étape de polymérisation radicalaire contrôlée d'une composition comprenant :
- au moins un monomère monoéthyléniquement insaturé,
- au moins un monomère multiéthyléniquement insaturé,
- une source de radicaux libres, et
- un agent de contrôle,
**caractérisé en ce que** la polymérisation radicalaire contrôlée est effectuée selon un procédé de transfert réversible par addition-fragmentation de composés thiocarbonylthio.

L'invention concerne également un procédé de préparation de microgels statistiques dits de deuxième génération, qui comprend les étapes suivantes :
1) on met en oeuvre un procédé de préparation du microgel de première génération qui comprend une étape de polymérisation radicalaire contrôlée selon un procédé de type Atom Transfer Radical Polymerization (ATRP) ou par un procédé de transfert réversible par addition-fragmentation de composés thiocarbonylthio, d'une composition comprenant :
   - au moins un monomère monoéthyléniquement insaturé,
   - au moins un monomère multiéthyléniquement insaturé,
   - une source de radicaux libres, et
   - un agent de contrôle
2) on ajoute au microgel obtenu à l'étape 1 au moins un monomère mono ou multi éthyléniquement insaturé en présence d'un activateur.

Les monomères éthyléniquement insaturés utiles dans le procédé de la présente invention sont tous les monomères qui polymérisent en présence de l'agent de contrôle, pour donner des chaînes polymères actives.
Ces monomères éthyléniquement insaturés sont par exemple
- le styrène et les dérivés du styrène comme l'alphaméthylstyrène ou le vinyltoluène
- les esters vinyliques d'acide carboxylique comme l'acétate de vinyle, le Versatate® de vinyle, le propionate de vinyle,
- les halogénures de vinyle et de vinylidène,
- les acides mono- et di- carboxyliques insaturés éthyléniques comme l'acide acrylique, l'acide méthacrylique, l'acide itaconique, l'acide maléique, l'acide fumarique et les mono-alkylesters des acides dicarboxyliques du type cité avec les alcanols ayant de préférence 1 à 4 atomes de carbone et leurs dérivés N-substitués,
- les amides des acides carboxyliques insaturés comme l'acrylamide, le méthacrylamide, le N-méthylolacrylamide ou méthacrylamide, les N-alkylacrylamides.
- les monomères éthyléniques comportant un groupe acide sulfonique et ses sels alcalins ou d'ammonium par exemple l'acide vinylsulfonique, l'acide vinyl-benzène sulfonique, l'acide alpha-acrylamido méthylpropane-sulfonique, le 2-sulfoéthylène-méthacrylate,
- les amides de la vinylamine, notamment le vinylformamide, le vinylacétamide, la N-vinylpyrrolidone et la N-vinylcaprolactame,
- les monomères éthyléniques insaturés comportant un groupe amino secondaire, tertiaire ou quaternaire, ou un groupe hétérocyclique contenant de l'azote tel que par exemple les vinylpyridines, le vinylimidazole, les (méth)acrylates d'aminoalkyle et les (méth)acrylamides d'aminoalkyle comme le diméthylaminoéthyl-acrylate ou -méthacrylate, le ditertiobutylaminoéthyl-acrylate ou -méthacrylate, le diméthylamino méthyl-acrylamide ou -méthacrylamide, ou des monomères zwitterioniques comme par exemple l'acrylate de sulfopropyl (diméthyl)aminopropyle,
- les esters (méth)acryliques, tels que l'acrylate de glycidyle ou le méthacrylate de glycidyle,
- les nitriles vinyliques,
- les monomères comprenant au moins une fonction boronate ou un précurseur choisis, par exemple, parmi l'acide acryloylbenzène boronique, l'acide méthacryloylbenzène boronique, l'acide vinyl-4 benzène boronique, l'acide 3-acrylamido phényl boronique, l'acide 3-méthacrylamido phényl boronique, seuls ou en mélanges, ou sous forme de sels,
- les monomères comprenant des phosphonates, choisis par exemple parmi les dérivés N-methacrylamidomethylphosphonic acid esters, en particulier l'ester n-propylique (RN 31857-11-1), l'ester méthylique (RN 31857-12-2), l'ester éthylique (RN 31857-13-3), l'ester n-butylique (RN 31857-14-4), l'ester isopropylique (RN 51239-00-0), ainsi que leurs dérivés monoacide et diacide phosphonique, tel le N-methacrylamidomethylphosphonic diacid (RN 109421-20-7) ; les dérivés N-methacrylamidoethylphosphonic acid esters, tel le N-methacrylamidoethyl phosphonic acid dimethyl ester (RN 266356-40-5), le N-methacrylamidoethyl phosphonic acid di(2-butyl-3,3-dimethyl) ester (RN 266356-45-0), ainsi que leurs dérivés monoacide et diacide phosphonique, tel le N-methacrylamidoethylphosphonic diacid (RN 80730-17-2); les dérivés N-acrylamidomethylphosphonic acid esters tels le N-acrylamidomethyl phosphonic acid dimethyl ester (RN 24610-95-5), le N-acrylamidomethyl phosphonic acid diethyl ester (RN 24610-96-6), le bis(2-chloropropyl) N-acrylamidomethyl phosphonate (RN 50283-36-8), ainsi que leurs dérivés monoacide et diacide phosphonique tel le N-acrylamidomethyl phosphonic acid (RN 151752-38-4) ; les dérivés vinylbenzylphosphonate dialkyl ester, en particulier les dérivés di(n-propyl) (RN 60181-26-2), di(isopropyl) (RN 159358-34-6), diethyl (RN 726-61-4), dimethyl (RN 266356-24-5), di(2-butyl-3,3-dimethyl) (RN 266356-29-0) et di (t-butyl) ester (RN 159358-33-5), ainsi que leurs variantes monoacide et diacide phosphonique, tel le vinylbenzylphosphonic diacid (RN 53459-43-1); le diéthyl 2-(4-vinylphenyl)ethanephosphonate (RN 61737-88-0) ; les dérivés dialkylphosphonoalkyl acrylates et méthacrylates, tel le 2-(acryloyloxy)ethylphosphonic acid dimethyl ester (RN 54731-78-1) et le 2-(methacryloyloxy)ethylphosphonic acid dimethyl ester (RN 22432-83-3), le 2-(methacryloyloxy)methylphosphonic acid diethyl ester (RN 60161-88-8), le 2-(methacryloyloxy)methylphosphonic acid dimethyl ester (RN 63411-25-6), le 2-(methacryloyloxy)propylphosphonic acid dimethyl ester (RN 252210-28-9), le 2-(acryloyloxy)methylphosphonic acid diisopropyl ester (RN 51238-98-3), le 2-(acryloyloxy) ethylphosphonic acid diethyl ester (RN 20903-86-0), ainsi que leurs variantes monoacide et diacide phosphonique, tel le 2-(methacryloyloxy)ethylphosphonic acid (RN 80730-17-2), le 2-(methacryloyloxy)methylphosphonic acid (RN 87243-97-8), le 2-(methacryloyloxy)propylphosphonic acid (RN 252210-30-3), le 2-(acryloyloxy)propylphosphonic acid (RN 254103-47-4) et le 2-(acryloyloxy)ethylphosphonic acid ; l'acide vinyl phosphonique, éventuellement substitué par des groupements cyano, phényle, ester ou acétate, l'acide vinylidene phosphonique, sous forme de sel de sodium ou son ester isopropylique, le vinylphosphonate de bis(2-chloroéthyle), ces monomères à fonction mono ou diacide phosphonique pouvant être utilisés sous forme neutralisée, partiellement ou totalement, éventuellement par une amine, par exemple la dicyclohexylamine,
- les monomères choisis parmi les analogues phosphates des monomères phosphonatés décrits ci-dessus, les monomères comportant alors un enchaînement -C-O-P- comparativement à l'enchaînement -C-P- des phosphonates, et
- Les monomères porteurs d'un groupe alcoxysilane choisi parmi le méthacrylate de triméthoxysilylpropyle, le méthacrylate de triéthoxysilylpropyle, le méthacrylate de tributoxysilylpropyle, le méthacrylate de diméthoxyméthylsilylpropyle, le méthacrylate de diéthoxyméthylsilylpropyle, le méthacrylate de dibutoxyméthylsilylpropyle, le méthacrylate de diisopropoxyméthylsilylpropyle, le méthacrylate de diméthoxysilylpropyle, le méthacrylate de diéthoxysilylpropyle, le méthacrylate de dibutoxysilylpropyle, le méthacrylate de diisopropoxysilylpropyle, le méthacrylate de triméthoxysilylpropyle, le méthacrylate de triéthoxysilylpropyle, le méthacrylate de tributoxysilylpropyle, l'acrylate de triméthoxysilylpropyle, l'acrylate de triéthoxysilylpropyle, l'acrylate de tributoxysilylpropyle, l'acrylate de diméthoxyméthylsilylpropyle, l'acrylate de diéthoxyméthylsilylpropyle, l'acrylate de dibutoxyméthylsilylpropyle, l'acrylate de diisopropoxyméthylsilylpropyle, l'acrylate de diméthoxysilylpropyle, l'acrylate de diéthoxysilylpropyle, l'acrylate de dibutoxysilylpropyle, l'acrylate de diisopropoxysilylpropyle, l'acrylate de triméthoxysilylpropyle, l'acrylate de triéthoxysilylpropyle, ou l'acrylate de tributoxysilylpropyle.

Par esters (méth)acryliques, on désigne les esters de l'acide acrylique et de l'acide méthacrylique avec les alcools en C₁-C₁₂ hydrogénés ou fluorés, de préférence C₁-C₈. Parmi les composés de ce type, on peut citer : l'acrylate de méthyle, l'acrylate d'éthyle, l'acrylate de propyle, l'acrylate de n-butyle, l'acrylate d'isobutyle, l'acrylate de 2-éthylhexyle, l'acrylate de t-butyle, le méthacrylate de méthyle, le méthacrylate d'éthyle, le méthacrylate de n-butyle, le méthacrylate d'isobutyle.
Les nitriles vinyliques incluent plus particulièrement ceux ayant de 3 à 12 atomes de carbone, comme en particulier l'acrylonitrile et le méthacrylonitrile.
Pour la préparation de bloc polyvinylamines, on utilise de préférence à titre de monomères éthyléniquement insaturés les amides de la vinylamine, par exemple le vinylformamide ou le vinylacétamide. Puis, le polymère obtenu est hydrolysé à pH acide ou basique.
Pour la préparation de bloc polyalcoolvinyliques, on utilise de préférence à titre de monomères éthyléniquement insaturés les esters vinyliques d'acide carboxylique, comme par exemple l'acétate de vinyle. Puis, le polymère obtenu est hydrolysé à pH acide ou basique.

De préférence, les monomères éthyléniquement insaturés utilisés dans la préparation des microgels sont choisis parmi les monomères styréniques, les esters vinyliques, les acrylates hydrophiles neutres ou chargés, les acrylates hydrophobes, les méthacrylates hydrophiles neutres ou chargés, les méthacrylates hydrophobes, les acrylamido hydrophiles, hydrophobes, neutres ou chargés, les méthacrylamido hydrophiles, hydrophobes, neutres ou chargés.

Les types et quantités de monomères polymérisables mis en oeuvre selon la présente invention varient en fonction de l'application finale particulière à laquelle est destiné le polymère. Ces variations sont bien connues et peuvent être facilement déterminées par l'homme du métier.
Ces monomères éthyléniquement insaturés peuvent être utilisés seuls ou en mélanges.

Les monomères multiéthyléniquement insaturés utiles dans le procédé de la présente invention sont tous les monomères qui polymérisent en présence de l'agent de contrôle pour donner des microgels dits de première génération et de génération supérieure.
Les monomères multiéthyléniquement insaturés sont choisis parmi des composés organiques comportant au moins deux insaturations éthyléniques et au plus 10 insaturations et connus comme étant réactifs par voie radicalaire.
De préférence, ces monomères présentent deux ou trois insaturations éthyléniques.
Ainsi, on peut notamment citer les dérivés acryliques, méthacryliques, acrylamido, méthacrylamido, ester vinylique, éther vinylique, diénique, styrénique, alpha-méthyl styrénique et allylique. Ces monomères peuvent aussi renfermer des groupements fonctionnels autres que les insaturations éthyléniques, par exemple des fonctions hydroxyle, carboxyle, ester, amide, amino ou amino substitués, mercapto, silane, epoxy ou halogéno.
Les monomères appartenant à ces familles sont le divinylbenzène et les dérivés du divinylbenzène, le méthacrylate de vinyle, l'anhydride d'acide méthacrylique, le méthacrylate d'allyle, le diméthacrylate d'éthylèneglycol, le phénylène diméthacrylate, le diméthacrylate de diéthylène glycol, le diméthacrylate de triéthylène glycol, le diméthacrylate de tétraéthylène glycol, le diméthacrylate de polyéthylène glycol 200, le diméthacrylate de polyéthylène glycol 400, le 1,3-diméthacrylate de butanediol, le 1,4-diméthacrylate de butanediol, le 1,6-diméthacrylate de hexanediol, le 1,12-diméthacrylate de dodécanediol, le 1,3-diméthacrylate de glycérol, le diméthacrylate de diuréthane, le triméthacrylate de triméthylolpropane. Pour la famille des acrylates multifonctionnels, on peut notamment citer l'acrylate de vinyle, le diacrylate de bisphénol A époxy, le diacrylate de dipropylèneglycol, le diacrylate de tripropylèneglycol, le diacrylate de polyéthylène glycol 600, le diacrylate d'éthylène glycol, le diacrylate de diéthylène glycol, le diacrylate de triéthylène glycol, le diacrylate de tetraéthylène glycol, le diacrylate de néopentyl glycol éthoxylé, le diacrylate de butanediol, le diacrylate d'hexanediol, le diacrylate d'uréthane aliphatique, le triacrylate de triméthylolpropane, le triacrylate de triméthylolpropane éthoxylé, le triacrylate de triméthylolpropane propoxylé, le triacrylate de glycérol propoxylé, le triacrylate d'uréthane aliphatique, le tétraacrylate de triméthylolpropane, le pentaacrylate de dipentaérytritol. Concernant les éthers vinyliques, on peut notamment citer le vinyl crotonate, le diéthylène glycoldivinyléther, l'ether divinylique de butanediol-1,4, le triéthylèneglycol divinyl éther. Pour les dérivés allyliques, on peut notamment citer le diallyl phtalate, le diallyldiméthylammonium chloride, le diallyl malléate, le sodium diallyloxyacetate, le diallylphenylphosphine, le diallylpyrocarbonate, le diallyl succinate, le N,N'-diallyltartardiamide, le N,N-diallyl-2,2,2-trifluoroacétamide, l'ester allylique du diallyloxy acide acétique, le 1,3-diallylurée, la triallylamine, le triallyl trimesate, le triallyl cyanurate, le triallyl trimellitate, le triallyl-1,3,5-triazine-2,4,6(1H, 3H, 5H)-trione. Pour les dérivés acrylamido, on peut notamment citer le N,N'-méthylènebisacrylamide, le N,N'-méthylènebismethacrylamide, le glyoxal bisacrylamide, le diacrylamido acide acétique. En ce qui concerne les dérivés styréniques, on peut notamment citer le divinylbenzène et le 1,3-diisopropénylbenzène. Dans le cas des monomères diéniques, on peut notamment citer le butadiène, le chloroprène et l'isoprène.

Comme monomères multiéthyléniquement insaturés, on préfère le N,N'-méthylènebisacrylamide, le divinylbenzène, le diacrylate d'éthylène glycol, ou le triacrylate de triméthylolpropane.
Ces monomères multiéthyléniquement insaturés peuvent être utilisés seuls ou en mélanges.

Les types et quantités de monomères multiéthyléniquement insaturés mis en oeuvre selon la présente invention varient en fonction de l'application finale particulière à laquelle est destiné le microgel statistique. Ces variations sont facilement déterminées par l'homme du métier.

La fraction molaire de monomères multiéthyléniquement insaturés par rapport aux monomères monoéthyléniquement insaturés est comprise entre 0,001 et 1. De préférence la fraction molaire est comprise entre 0,01 et 1.

Le procédé de l'invention est dans tous les cas mis en oeuvre en présence d'une source de radicaux libres. Cependant, pour certains monomères, tels que le styrène, les radicaux libres permettant d'initier la polymérisation peuvent être générés par le monomère monoéthyléniquement insaturé, à des températures suffisamment élevées généralement supérieures à 100°C. Il n'est pas, dans ce cas, nécessaire d'ajouter une source de radicaux libres supplémentaires.

Dans le cas où on met en oeuvre un procédé selon l'invention par polymérisation radicalaire vivante de type transfert réversible par addition-fragmentation de composés thiocarbonylthio ou thiophosphates, la source de radicaux libres utile est généralement un initiateur de polymérisation radicalaire. L'initiateur de polymérisation radicalaire peut être choisi parmi les initiateurs classiquement utilisés en polymérisation radicalaire. Il peut s'agir par exemple d'un des initiateurs suivants :
- les peroxydes d'hydrogène tels que : l'hydroperoxyde de butyle tertiaire, l'hydroperoxyde de cumène, le t-butyl-peroxyacétate, le t-butyl-peroxybenzoate, le t-butylperoxyoctoate, le t-butylperoxynéodécanoate, le t-butylperoxyisobutarate, le peroxyde de lauroyle, le t-amylperoxypivalte, le t-butylperoxypivalate, le peroxyde de dicumyl, le peroxyde de benzoyle, le persulfate de potassium, le persulfate d'ammonium,
- les composés azoïques tels que : le 2-2'-azobis(isobutyronitrile), le 2,2'-azobis(2-butanenitrile), le 4,4'-azobis(4-acide pentanoïque), le 1,1'-azobis(cyclohexane-carbonitrile), le 2-(t-butylazo)-2-cyanopropane, le 2,2'-azobis[2-méthyt-N-(1,1)-bis(hydroxyméthyl)-2-hydroxyéthyl] propionamide, le 2,2'-azobis(2-méthyl-N-hydroxyéthyl]-propionamide, le dichlorure de 2,2'-azobis(N,N'-diméthylèneisobutyramidine), le dichlorure de 2,2'-azobis (2-amidinopropane), le 2,2'-azobis (N,N'-diméthylèneisobutyramide), le 2,2'-azobis(2-méthyl-N-[1,1-bis (hydroxyméthyl)-2-hydroxyéthyl] propionamide), le 2,2'-azobis(2-méthyl-N-[1,1-bis (hydroxyméthyl)éthyl] propionamide), le 2,2'-azobis[2-méthyl-N-(2-hydroxyéthyl) propionamide], le 2,2'-azobis(isobutyramide) dihydrate,
- les systèmes redox comportant des combinaisons telles que :

- les mélanges de peroxyde d'hydrogène, d'alkyle, peresters, percarbonates et similaires et de n'importe lequel des sels de fer, de sels titaneux, formaldéhyde sulfoxylate de zinc ou formaldéhyde sulfoxylate de sodium, et des sucres réducteurs,
- les persulfates, perborate ou perchlorate de métaux alcalins ou d'ammonium en association avec un bisulfite de métal alcalin, tel que le métabisulfite de sodium, et des sucres réducteurs, et
- les persulfates de métal alcalin en association avec un acide arylphosphinique, tel que l'acide benzène phosphonique et autres similaires, et des sucres réducteurs.

Selon un mode de réalisation pour le procédé de préparation de microgels statistiques selon l'invention, la quantité d'initiateur à utiliser est déterminée de manière à ce que la quantité de radicaux générés soit d'au plus 50 % en mole, de préférence d'au plus 20 % en mole, par rapport à la quantité d'agent de contrôle.

Parmi les agents de contrôle utilisables dans la polymérisation radicalaire par un procédé de type transfert réversible par addition-fragmentation de composés thiocarbonylthio, pour préparer le microgel de première génération, on peut notamment citer les agents d'addition-fragmentation réversible de type dithioester de formule RSC=SR', tels que décrits dans les demandes de brevets WO 98/01478 et WO 99/35178, les xanthates RSC=SOR', tels que décrits dans les demandes de brevets WO 98/58974, WO 00/75207 et WO 01/42312, les dithiocarbamates de formule RS(C=S)NR₁R₂, tels que ceux décrits dans les demandes de brevets WO 99/35177 et WO 99/31144, les composés thioether-thiones, tels que ceux décrits dans la demande de brevet FR 2794464, déposée au nom de la société Rhodia Chimie, ou les composés dithiocarbazates tels que ceux décrits dans la demande de brevet WO 02/26836 déposée au nom de la société SYMYX.

Ainsi, les agents de contrôle utilisables dans la polymérisation radicalaire par un procédé de type transfert réversible par addition-fragmentation de composés thiocarbonylthio sont des composés qui peuvent être de formule (A) suivante : 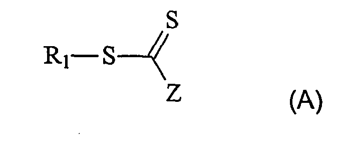 dans laquelle :
- Z représente :
   - un atome d'hydrogène,
   - un atome de Chlore,
   - un radical alkyl éventuellement substitué, aryl éventuellement substitué,
   - un hétérocycle éventuellement substitué,
   - un radical alkylthio éventuellement substitué,
   - un radical arylthio éventuellement substitué,
   - un radical alkoxy éventuellement substitué,
   - un radical aryloxy éventuellement substitué,
   - un radical amino éventuellement substitué,
   - un radical hydrazine éventuellement substitué,
   - un radical alkoxycarbonyl éventuellement substitué,
   - un radical aryloxycarbonyl éventuellement substitué,
   - un radical carboxy, acyloxy éventuellement substitué,
   - un radical aroyloxy éventuellement substitué,
   - un radical carbamoyle éventuellement substitué,
   - un radical cyano,
   - un radical dialkyl- ou diaryl-phosphonato,
   - un radical dialkyl-phosphinato ou diaryl-phosphinato, ou
   - une chaîne polymère,
- R₁ représente :
   - un groupe alkyle, acyle, aryle, aralkyle, alcène ou alcyne éventuellement substitué,
   - un cycle carboné ou un hétérocycle, saturé ou non, aromatique éventuellement substitué,
   - une chaîne polymère,

Les groupes R₁ ou Z, lorsqu'ils sont substitués, peuvent être substitués par des groupes phényles éventuellement substitués, des groupes aromatiques éventuellement substitués, des cycles carbonés saturés ou non, des hétérocycles saturé ou non, ou des groupes : alkoxycarbonyle ou aryloxycarbonyle (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, perfluoroalkyle CₙF₂ₙ₊₁, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (PEO, POP), les substituants cationiques (sels d'ammonium quaternaires), R représentant un groupe alkyle ou aryle, ou une chaîne polymère.

Selon un mode de réalisation particulier, R₁ est un groupe alkyle substitué ou non, de préférence substitué.

Les composés (A) utiles dans la présente invention sont par exemple les composés dans lesquels R₁ est choisi parmi :

- CH₂C₆H₅

- CH(CH₃)(CO₂Et)

- CH(CH₃)(C₆H₅)

- CH(CO₂Et)₂

- C(CH₃)(CO₂Et)(S-C₆H₅)

- C(CH3)2(C6H5)

- C(CH₃)₂CN

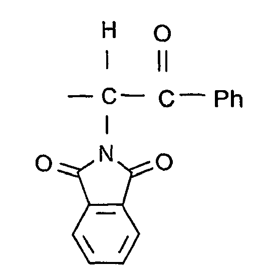

dans lesquelles Et représente un groupe éthyle et Ph représente un groupe phényle.

Les groupes alkyle, acyle, aryle, aralkyle ou alcyne éventuellement substitués présentent généralement 1 à 20 atomes de carbone, de préférence 1 à 12, et plus préférentiellement 1 à 9 atomes de carbone. Ils peuvent être linéaires ou ramifiés. Ils peuvent être également substitués par des atomes d'oxygène, sous forme notamment d'esters, des atomes de soufre ou d'azote.
Parmi les radicaux alkyle, on peut notamment citer le radical méthyle, éthyle, propyle, butyle, pentyle, isopropyle, tert-butyle, pentyle, hexyle, octyle, decyle ou dodécyle.
Les groupes alcynes sont des radicaux généralement de 2 à 10 atomes de carbone, ils présentent au moins une insaturation acétylénique, tel que le radical acétylenyle.
Le groupe acyle est un radical présentant généralement de 1 à 20 atomes de carbone avec un groupement carbonyle.
Parmi les radicaux aryle, on peut notamment citer le radical phényle, éventuellement substitué notamment par une fonction nitro ou hydroxyle.
Parmi les radicaux aralkyle, on peut notamment citer le radical benzyle ou phénéthyle, éventuellement substitué notamment par une fonction nitro ou hydroxyle.
Lorsque R₁ ou Z est une chaîne polymère, cette chaîne polymère peut être issue d'une polymérisation radicalaire ou ionique ou issue d'une polycondensation.

Dans le cadre de la présente invention, on préfère les agents de contrôle suivants : les composés xanthates, dithiocarbamates, dithioesters, dithiocarbazates.
Avantageusement, on utilise, comme agent de contrôle, les composés xanthates.

Lorsque les microgels statistiques de première génération constitués de polymères à extrémités de chaînes halogénées ou pseudo-halogénées sont obtenus par le procédé *Atom Transfer Radical Polymerization* (ATRP), l'agent de contrôle de la polymérisation est un métal de transition associé à un ligand jouant le rôle de catalyseur de la polymérisation.

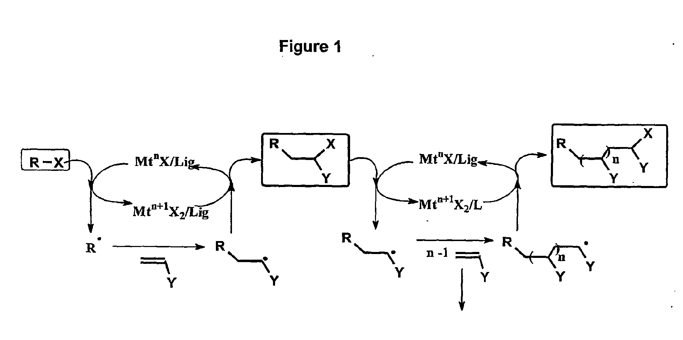

On peut citer à titre d'exemple de métal de transition associé à un ligand jouant le rôle de catalyseur de la polymérisation les complexes du type Cux/2,2'-bipyridyle CuX/base de Schiff, CuX/N-alkyl-2-pyridylmethanimine, CuX/tris[2-(dimethylamino)ethyl]amine, CuX/N,N,N',N",N",-pentamethyldiethylenetriamine, CuX/tris[(2-pyridyl)methyl]amine, Mn(CO)6, RuXx(PPh3)3, NiX[(o-o'-CH2NMe2)2C6H3], RhX(PPh3)3, NiX2(PPh3)2 et FeX2/P(n-Bu)3 où X est un halogène ou un pseudo-halogène.
Un trialkylate d'aluminium AI(OR)3 peut être employé comme additif pour activer la polymérisation.
Une liste détaillée de métaux de transition et ligands associés est décrite dans le document WO 96/30421, de la page 22 ligne 6 à la page 26, ligne 8.
Le mécanisme supposé du procédé *ATRP* est indiqué dans le schéma présenté sur la figure 1.

Le complexe métallique (MtⁿX) capte l'atome d'halogène de l'halogénure organique (R-X) pour former le radical R* et l'espèce métallique oxydée Mtⁿ⁺¹X₂. Dans l'étape suivante, R* réagit avec le monomère M pour former une nouvelle espèce active radicalaire RM*.
La réaction entre RM* et Mtⁿ⁺¹X₂ conduit à la formation d'une espèce RMX potentiellement ré-activable et, dans le même temps, le composé métallique sous sa forme réduite MtⁿX. Celui-ci peut de nouveau réagir avec RX et promouvoir un nouveau cycle rédox.
En présence d'un grand excès de monomère M, les espèces RMₙX sont suffisamment réactives vis à vis du complexe MtⁿX pour promouvoir un certain nombre de cycles d'activation-désactivation, c'est à dire une réaction de polymérisation radicalaire « vivante » ou contrôlée.
Des détails sur le mécanisme de ce procédé sont décrites dans le document Macromolecules, 1995, 28, 7901 .

Dans le cas où on met en oeuvre un procédé selon l'invention par polymérisation radicalaire vivante de type ATRP, la source de radicaux libres utile est généralement un halogénure organique activé par voie rédox.

Les halogénures organiques jouant le rôle de source de radicaux libres dans le procédé ATRP sont par exemple :
- un halogénure d'arènesulfonyle ou un halogénure d'alkanesulfonyle de formule RSO2X, où X est un atome de chlore, un atome de brome ou un atome d'iode et R un groupement aryle, alkyle, alkyle substitué ou aryl substitué. Une liste des groupements R qui entrent dans le cadre de l'invention est donnée par exemple dans le document WO9820050,
- un halogénure de formule R'X, où où X est généralement un atome de chlore, un atome de brome ou un atome d'iode et R' un groupement aryle, alkyle, alkyle substitué, aryl substitué ou cycloalkyle. Une liste des groupements R' qui entrent dans l'invention est donnée par exemple dans le document WO9630421, de la page 19 ligne 20 à la page 22, ligne 5, qui est incorporé par référence.

De préférence la polymérisation radicalaire contrôlée selon l'invention est effectuée selon un procédé de transfert réversible par addition-fragmentation de composés thiocarbonylthio.

L'invention a également pour objet un procédé de préparation de microgels statistiques dits de deuxième génération, qui comprend une étape supplémentaire par rapport au procédé précédent consistant à ajouter au microgel obtenu à l'étape 1 au moins un monomère mono ou multi éthyléniquement insaturé en présence d'un activateur.

L'activateur dépend du mode de polymérisation radicalaire contrôlée utilisée.

Lorsque on utilise un procédé de polymérisation radicalaire contrôlée de type transfert réversible par addition-fragmentation de composés thiocarbonylthio, alors l'activateur est une source de radicaux libre telle que définie précédemment.

Lorsque on utilise un procédé de polymérisation radicalaire contrôlée de type ATRP, alors l'activateur est un catalyseur organométallique.

Ce procédé conduit à la formation d'homopolymères ou copolymères à blocs à partir des points d'attache des agents de contrôle sur le microgel de première génération, qui constituent les bras du microgel de deuxième génération.

De préférence le monomère utilisé dans l'étape 2 est un monomère monoéthyléniquement insaturé tel que défini ci-dessus.
De préférence le procédé de polymérisation radicalaire contrôlée utilisée dans l'étape 2 est de type transfert réversible par addition-fragmentation de composés thiocarbonylthio.

L'invention a également pour objet un procédé de préparation de microgels statistiques dits de n-ième génération, qui comprend une étape supplémentaire par rapport au procédé de préparation de microgels statistiques dits de (n-1)-ième génération, consistant à ajouter au microgel de génération n-1 obtenu au moins un monomère mono ou multi éthyléniquement insaturé en présence d'un activateur tel que défini ci-dessus.
n est un nombre entier compris entre 2 et 50, de préférence entre 2 et10 et de manière encore plus préférentielle entre 2 et 5.

De préférence le monomère utilisé dans l'étape n est un monomère monoéthyléniquement insaturé tel que défini ci-dessus.
De préférence le procédé de polymérisation radicalaire contrôlée utilisée dans l'étape n est de type transfert réversible par addition-fragmentation de composés thiocarbonylthio.

Le procédé selon l'invention peut être réalisé en masse, en solution, en émulsion, en dispersion ou en suspension. De préférence, il est mis en oeuvre en solution ou en émulsion.
Lorsqu'il est réalisé en solution, en émulsion, en dispersion ou en suspension, l'extrait sec peut être compris entre 0,1% et 99%. L'extrait sec est avantageusement compris entre 1 et 70% en poids, encore plus avantageusement entre 4 et 50% en poids.

La température peut varier entre la température ambiante et 150°C selon la nature de la source de radicaux libres et des agents de contrôle utilisés.

Généralement, le procédé est mis en oeuvre en l'absence de source UV, par amorçage thermique dans le cas d'un procédé de polymérisation radicalaire contrôlée de type transfert réversible par addition-fragmentation de composés thiocarbonylthio, ou par amorçage rédox dans le cas d'un procédé de polymérisation radicalaire contrôlée de type ATRP.

Il est possible de moduler les propriétés des microgels obtenus en sélectionnant des monomères à insaturation éthylénique spécifiques, et en choisissant l'ordre ou le mode d'introduction ou les quantités respectives des monomères introduits.

Par exemple, dans le cas d'agents de contrôle peu réactifs, il peut être avantageux d'introduire le ou les monomères en continu.

On peut à titre d'exemple prévoir des associations de monomères hydrophiles neutres avec des monomères hydrophiles chargés, présentant soit des charges positives, soit des charges négatives.
On peut également prévoir des associations de monomères hydrophiles avec des monomères hydrophobes.
On peut également prévoir des associations de monomères hydrophobes durs avec des monomères hydrophobes mous.
Par monomère dur, on entend un monomère menant à un polymère de température de transition vitreuse supérieure à 20°C.
Par monomère mou, on entend un monomère menant à un polymère de température de transition vitreuse inférieure à 20°C.

Il est également possible de faire varier le taux de ramification, les masses molaires moyennes en nombre et la densité de fonctions réactives en surface, par conséquent la forme et la taille desdits microgels statistiques.
Ces caractéristiques moléculaires peuvent être obtenues en faisant varier un certain nombre de paramètres expérimentaux parmi lesquels la concentration du milieu réactionnel, la nature du solvant de polymérisation, la proportion et la nature chimique du monomère multiéthyléniquement insaturé, la proportion et la nature chimique de l'agent de contrôle ou la température de polymérisation.

La présente invention a également pour objet les microgels susceptibles d'être obtenus par l'un quelconque des procédés précédemment décrits.

La présente invention a également pour objet des polymères en forme d'étoile susceptibles d'être obtenus par un procédé de préparation de microgel de génération n, avec n compris entre 2 et 50, lorsque le ou les monomère(s) utilisé(s) à l'étape n est ou sont un ou des monomère(s) monoéthyléniquement insaturé(s).

Ainsi, ces polymères en étoile sont caractérisés en ce qu'ils présentent (1) une portion centrale sous forme d'un microgel de première génération à base d'un polymère réticulé issu de la polymérisation des monomères mono et multiéthyléniquement insaturés, et (2) de bras constitués par les monomères monoéthyléniquement insaturés uniquement ajoutés à partir de l'étape 2, tels que définis ci-dessus et comprenant à leur extrémité la partie active de l'agent de contrôle (fonction -S(C=S)-) dans le cas d'un procédé de polymérisation radicalaire contrôlée de type transfert réversible par addition-fragmentation de composés thiocarbonylthio, à leur extrémité, ou la partie halogénée ou pseudo-halogénée dans le cas d'un procédé de polymérisation radicalaire contrôlée de type ATRP.

Quelle que soit la génération du microgel, la partie active de l'agent de contrôle ( fonction -S(C=S)- dans le cas d'un procédé de polymérisation radicalaire contrôlée de type transfert réversible par addition-fragmentation de composés thiocarbonylthio, peut être substituée en tout ou partie par un atome d'hydrogène ou une fonction thiol en mettant en oeuvre des procédés connus de l'homme de l'art.

Ces procédés consistent en une étape de clivage, telles que notamment celle décrite dans le document WO 02/090424 et dans Mori et al. dans J. Org. Chem., 34, 12, 1969, 4170 (transformation de xanthate en thiol) ou encore celle décrite par Udding et al. dans le document WO 02/090397 et dans J. Org. Chem., 59, 1994, 6671 (transformation en atome d'hydrogène).
Les microgels selon l'invention présentent alors des extrémités de chaînes à base d'atomes d'hydrogène ou de fonctions thiol se substituant en tout ou partie à la partie active (fonction -S(C=S)-) de l'agent de contrôle.

Les extrêmités de chaînes halogénées issues du procédé ATRP peuvent être également modifiées chimiquement de diverses manières. On peut citer par exemple la réaction de déhydrohalogénation en présence d'un composé insaturé, décrite dans le brevet WO99/54365, qui génère une insaturation en bout de chaîne. L'extrémité halogénée peut également être transformée en d'autres fonctionnalités, par exemple par substitution nucléophile ou addition électrophile, ou encore par addition radicalaire. L'ensemble de ces techniques de transformation des bouts de chaîne halogénés est décrit dans le document « Progress in Polymer Science (2001), 26(3), 337 ».

Les exemples suivants illustrent l'invention.

### EXEMPLES:

Dans les exemples donnés ci-dessous, les réactions de polymérisation sont effectuées sous léger balayage d'azote dans des réacteurs en verre immergés dans un bain d'huile préchauffé à une température donnée. Les réactifs sont introduits dans l'ordre suivant : agent de contrôle, solvant, monomère(s) éthyléniquement inaturé(s), monomère(s) multiéthyléniquement insaturé(s) et amorceur. Comme générateurs de radicaux libres, on utilise l'azobis-de l'acide 4,4'-cyanopentanoique (ACP) dans le cas où les polymérisations sont effectuées selon le procédé utilisant des agents de contrôle porteurs de groupements thiocarbonyl thio ou des groupements thiophosphate. La conversion du monomère est évaluée par gravimétrie, ou le cas échéant, par HPLC. L'analyse des (co)polymères est réalisée par chromatographie d'exclusion stérique (SEC), en utilisant soit le THF, soit un mélange eau/acétonitrile (80% /20% en vol.) comme solvant d'élution. Les masses molaires moyennes en nombre (Mₙ) et en masse (M_{w}) (g.mol⁻¹), exprimées en équivalents polystyrène ou poly(oxyde d'éthylène), et la distribution des masses molaires évaluée par l'indice de polymolécularité (Iₚ) correspondant au rapport M_{w}/Mₙ sont ici données à titre indicatif.
Ces exemples démontrent que l'utilisation de quantités appropriées de l'agent de contrôle permet d'obtenir des polymères solubles dans le solvant de polymérisation, comparativement aux expériences témoins mettant en jeu les mêmes réactifs à l'exception de l'agent de contrôle. Dans ce cas, en effet, on obtient un gel insoluble. Le contrôle de la polymérisation est notamment mis en évidence par le fait que les microgels statistiques de première génération peuvent être réactivés en servant de coeurs multifonctionnels au cours d'une étape ultérieure de polymérisation. Ceci permet de générer des microgels statistiques de deuxième génération constitués du coeur à base du microgel statistique de première génération et de bras polymères dont la masse molaire moyenne en nombre augmente avec le taux de conversion du monomère.

### Exemple 1. Synthèse de microgels statistiques à base de polyacrylamide préparé à partir de l'agent de contrôle EtOC(=S)SCH(CH₃)COOCH₃

Les polymérisations de l'acrylamide sont effectuées à 70°C en présence de N-méthylène(bis-acrylamide) (MBA) et d'ACP pendant 4 heures.

### Exemple 1.1

On ajoute 0,355 g (1,71x10⁻³ mol) du xanthate EtOC(=S)SCH(CH₃)COOCH₃, 2,37 g (0,0333 mol) d'acrylamide, 0,053 g (3,44x10⁻⁴ mol) de MBA et 0,099 g (3,53x10⁻⁴ mol) d'ACP dans un mélange comprennant 9,1 g d'eau déionisée et 2,3 g d'isopropanol. Après 4 heures de réaction à 70°C, la caractérisation du produit brut par SEC dans l'éluent aqueux montre l'absence de monomères résiduels et la présence d'une population majoritaire de masse molaire au sommet du pic correspondant à Mₚ = 1650 g.mol⁻¹.

### Exemple 1.2.

On ajoute 0,297 g (1,42x10⁻³ mol) du xanthate EtOC(=S)SCH(CH₃)COOCH₃, 1,03 g (0,0142 mol) d'acrylamide, 0,106 g (6,8x10⁻⁴ mol) de MBA et 0,070 g (2,5x10⁻⁴ mol) d'ACP dans un mélange comprennat 4,2 g d'eau déionisée et 1,05 g d'isopropanol. Après 4 heures de réaction à 70°C, la caractérisation du produit brut par SEC dans l'éluent aqueux montre l'absence de monomères résiduels. L'analyse SEC conduit aux valeurs suivantes : Mₙ = 1550 g.mol⁻¹ et Iₚ = 3,45.

### Exemple 1.3.

On ajoute 0,047 g (2,25x10⁻⁴ mol) du xanthate EtOC(=S)SCH(CH₃)COOCH₃, 1,64 g (0,0231 mol) d'acrylamide, 0,036 g (2,33x10⁻⁴ mol) de MBA et 0,030 g (1,07x10⁻⁴ mol) d'ACP dans un mélange comprennat 6,7 g d'eau déionisée et 1,7 g d'isopropanol. Après 4 heures de réaction à 70°C, on obtient un produit soluble dont la caractérisation par SEC dans l'éluent aqueux montre l'absence de monomères résiduels.

### Exemple 1.4.

On ajoute 0,047 g (2,25x10⁻⁴ mol) du xanthate EtOC(=S)SCH(CH₃)COOCH₃, 1,64 g (0,0231 mol) d'acrylamide, 0,070 g (4,54x10⁻⁴ mol) de MBA et 0,030 g (1,07x10⁻⁴ mol) d'ACP dans un mélange comprennat 6,7 g d'eau déionisée et 1,7 g d'isopropanol. Après 4 heures de réaction à 70°C, la caractérisation du produit brut par SEC dans l'éluent aqueux montre l'absence de monomères résiduels. L'analyse SEC conduit aux valeurs suivantes : Mₙ = 6990 g.mol⁻¹ et Iₚ = 22,3.

Les exemples qui suivent concernent la synthèse de microgels statistiques de deuxième génération à partir d'une solution aqueuse d'un microgel statistique de première génération décrit dans les exemples 1.1 à 1.4. Les polymérisations sont effectuées à 70°C pendant 15 heures en ajustant la concentration de la solution par addition d'eau déionisée et en ajoutant des quantités variables d'acide acrylique et de l'ACP. Dans ces exemples, le caractère contrôlé de la réaction de polymérisation est démontrée par le fait que la masse molaire des polymères est d'autant plus élevée que l'on augmente la quantité d'acide acrylique ajouté. A noter que la viscosité des solutions obtenues augmentent avec des quantités croissantes d'acide acrylique ajouté.

### Exemple 1.5.

On ajoute 0,34 g (4,72x10⁻³ mol) d'acide acrylique, 0,7 g d'eau déionisée et 0,030 g (1,10x10⁻⁴ mol) à 2,21 g de la solution du polymère obtenu dans l'exemple 1.1 décrit ci-dessus. On obtient un produit soluble dans l'eau dont la caractérisation par SEC dans l'éluent conduit aux valeurs suivantes : Mₙ = 3610 g.mol⁻¹ et Iₚ = 2,42.

### Exemple 1.6.

On ajoute 0,76 g (1,05x10⁻² mol) d'acide acrylique, 1,1 g d'eau déionisée et 0,030 g (1,10x10⁻⁴ mol) à 2,08 g de la solution du polymère obtenu dans l'exemple 1.3. décrit ci-dessus. On obtient un produit soluble dans l'eau dont la caractérisation par SEC dans l'éluent conduit aux valeurs suivantes : Mₙ = 5080 g.mol⁻¹ et Iₚ = 3,02.

### Exemple 1.7.

On ajoute 1,44 g (2,0x10⁻² mol) d'acide acrylique, 1,8 g d'eau déionisée et 0,030 g (1,10x10⁻⁴ mol) à 2,04 g de la solution du polymère obtenu dans l'exemple 1.1 décrit ci-dessus. On obtient un produit soluble dans l'eau dont la caractérisation par SEC dans l'éluent conduit aux valeurs suivantes : Mₙ = 8400 g.mol⁻¹ et Iₚ = 3,37.

### Exemple 1.8.

On ajoute 2,58 g (3,58x10⁻² mol) d'acide acrylique, 2,9 g d'eau déionisée et 0,030 g (1,10x10⁻⁴ mol) à 2,14 g de la solution du polymère obtenu dans l'exemple 1.1 décrit ci-dessus. On obtient un produit soluble dans l'eau dont la caractérisation par SEC dans l'éluent conduit aux valeurs suivantes : Mₙ = 13600 g.mol⁻¹ et Iₚ = 11,29.

### Exemple 1.9.

On ajoute 0,48 g (6,66x10⁻³ mol) d'acide acrylique, 0,8 g d'eau déionisée et 0,005 g (1,78x10⁻⁵ mol) à 2,02 g de la solution du polymère obtenu dans l'exemple 1.3. décrit ci-dessus. On obtient un produit soluble dans l'eau dont la caractérisation par SEC dans l'éluent conduit aux valeurs suivantes : Mₙ = 5620 g.mol⁻¹ et Iₚ = 2,77.

### Exemple 1.10.

On ajoute 0,66 g (9,16x10⁻³ mol) d'acide acrylique, 1 g d'eau déionisée et 0,005 g (1,78x10⁻⁵ mol) à 2,16 g de la solution du polymère obtenu dans l'exemple 1.3 décrit ci-dessus. On obtient un produit soluble dans l'eau dont la caractérisation par SEC dans l'éluent conduit aux valeurs suivantes : Mₙ = 7660 g.mol⁻¹ et Iₚ = 3,25.

### Exemple 1.11.

On ajoute 1,31 g (1,81x10⁻² mol) d'acide acrylique, 1,63 g d'eau déionisée et 0,005 g (1,78x10⁻⁵ mol) à 2,05 g de la solution du polymère obtenu dans l'exemple 1.3 décrit ci-dessus. On obtient un produit soluble dans l'eau dont la caractérisation par SEC dans l'éluent conduit aux valeurs suivantes : Mₙ = 11240 g.mol⁻¹ et Iₚ = 3,87.

### Exemple 1.12.

On ajoute 2,54 g (3,52x10⁻² mol) d'acide acrylique, 2,86 g d'eau déionisée et 0,005 g (1,78x10⁻⁵ mol) à 2,09 g de la solution du polymère obtenu dans l'exemple 1.3 décrit ci-dessus. On obtient un produit soluble dans l'eau dont la caractérisation par SEC dans l'éluent conduit aux valeurs suivantes : Mₙ = 13780 g.mol⁻¹ et Iₚ = 5,90.

### Exemple 2. Synthèse de microgels statistiques à base d'acrylate de butyle préparé à partir de l'agent de contrôle EtOC(=S)SCH(CH₃)COOCH₃

Les polymérisations de l'acrylate de butyle sont effectuées à 75 °C en présence de MBA et de 2,2'-azobis(2-methylbutyronitrile), (AMBN).

### Exemple 2.1.

On ajoute 0,625 g (3,0x10⁻³ mol) du xanthate EtOC(=S)SCH(CH₃)COOCH₃, 15 g (0,117 mol) d'acrylate de butyle, 1,386 g (9x10⁻³ mol) de MBA et 0,1154 g (6,0x10⁻⁴ mol) d'AMBN dans 113 mL d'éthanol. Après 5 heures de réaction à 75°C, on ajoute 0,0577 g (3,0x10⁻⁴ mol) d'AMBN au milieu réactionnel. Après un recuit de 5 heures la caractérisation du produit brut par SEC dans l'éluent THF montre l'absence de monomères résiduels. L'analyse SEC conduit aux valeurs suivantes : Mₙ = 9100 g.mol⁻¹ et Iₚ = 3,2.

Les exemples qui suivent concernent la synthèse de microgels statistiques de deuxième génération à partir d'une solution d'un microgel statistique de première génération décrit dans l'exemples 2.1. La polymérisation est effectuée à 75°C pendant 10 heures en ajustant la concentration de la solution par addition d'éthanol et en ajoutant des quantités variables d'acrylate de butyle et de l'AMBN. Dans ces exemples, le caractère contrôlé de la réaction de polymérisation est démontrée par le fait que la masse molaire des polymères est d'autant plus élevée que l'on augmente la quantité d'acrylate de butyle ajouté. A noter que la viscosité des solutions obtenues augmentent avec des quantités croissantes d'acrylate de butyle.

### Exemple 2.2.

On ajoute 12 g (9,36x10⁻² mol) d'acrylate de butyle, 0,0154 g (8,0x10⁻⁵ mol) d'AMBN et 17,53 g d'éthanol, en mode continu sur une durée de 2 heures à 18,074 g de la solution polymère obtenue dans l'exemple 2.1, qui aura été préalablement chauffée à 75 °C. A la fin de l'ajout en continu, on maintient le recuit pendant 4 heures avant l'ajout de 7,690x10⁻³ g (4,0x10⁻⁵ mol) d'AMBN. Après un recuit final de 4 heures, le produit obtenu est analysé par SEC dans l'éluent THF et conduit aux valeurs suivantes. Mₙ = 36 900 g.mol⁻¹ et Iₚ = 2,9.

### Exemple 2.3.

On ajoute 24 g (1,873x10⁻¹ mol) d'acrylate de butyle, 0,0154 g (8,0x10⁻⁵ mol) d'AMBN et 45,54 g d'éthanol, en mode continu sur une durée de 2 heures à 18,074 g de la solution polymère obtenue dans l'exemple 2.1, qui aura été préalablement chauffée à 75 °C. A la fin de l'ajout en continu, on maintient le recuit pendant 4 heures avant l'ajout de 7,690x10⁻³ g (4,0x10⁻⁵ mol) d'AMBN. Après un recuit final de 4 heures, le produit obtenu est analysé par SEC dans l'éluent THF et conduit aux valeurs suivantes. Mₙ = 48 600 g.mol⁻¹ et Iₚ = 2,6

## Revendications

1. Procédé de préparation de microgels statistiques dits de deuxième génération, qui comprend les étapes suivantes :
1) on met en oeuvre un procédé de préparation du microgel de première génération qui comprend une étape de polymérisation radicalaire contrôlée selon un procédé de type Atom Transfer Radical Polymerization (ATRP) ou par un procédé de transfert réversible par addition-fragmentation de composés thiocarbonylthio, d'une composition comprenant :
- au moins un monomère monoéthyléniquement insaturé,
- au moins un monomère multiéthyléniquement insaturé,
- une source de radicaux libres, et
- un agent de contrôle
2) on ajoute au microgel obtenu à l'étape 1 au moins un monomère mono ou multi éthyléniquement insaturé en présence d'un activateur.

2. Procédé selon la revendication 1, **caractérisé en ce que** le monomère monoéthyléniquement insaturé est choisi parmi :
- le styrène et les dérivés du styrène comme l'alphaméthylstyrène ou le vinyltoluène
- les esters vinyliques d'acide carboxylique comme l'acétate de vinyle, le Versatate® de vinyle, le propionate de vinyle,
- les halogénures de vinyle et de vinylidène,
- les acides mono- et di- carboxyliques insaturés éthyléniques comme l'acide acrylique, l'acide méthacrylique, l'acide itaconique, l'acide maléique, l'acide fumarique et les mono-alkylesters des acides dicarboxyliques du type cité avec les alcanols ayant de préférence 1 à 4 atomes de carbone et leurs dérivés N-substitués,
- les amides des acides carboxyliques insaturés comme l'acrylamide, le méthacrylamide, le N-méthylolacrylamide ou méthacrylamide, les N-alkylacrylamides.
- les monomères éthyléniques comportant un groupe acide sulfonique et ses sels alcalins ou d'ammonium par exemple l'acide vinylsulfonique, l'acide vinyl-benzène sulfonique, l'acide alpha-acrylamido méthylpropane-sulfonique, le 2-sulfoéthylène-méthacrylate,
- les amides de la vinylamine, notamment le vinylformamide, le vinylacétamide, la N-vinylpyrrolidone et la N-vinylcaprolactame,
- les monomères éthyléniques insaturés comportant un groupe amino secondaire, tertiaire ou quaternaire, ou un groupe hétérocyclique contenant de l'azote tel que par exemple les vinylpyridines, le vinylimidazole, les (méth)acrylates d'aminoalkyle et les (méth)acrylamides d'aminoalkyle comme le diméthylaminoéthyl-acrylate
ou -méthacrylate, le ditertiobutylaminoéthyl-acrylate ou -méthacrylate, le diméthylamino méthyl-acrylamide ou -méthacrylamide, ou des monomères zwitterioniques comme par exemple l'acrylate de sulfopropyl (diméthyl)aminopropyle,
- les esters (méth)acryliques; tels que l'acrylate de glycidyle ou le méthacrylate de glycidyle,
- les nitriles vinyliques,
- les monomères comprenant au moins une fonction boronate ou un précurseur choisis, par exemple, parmi l'acide acryloylbenzène boronique, l'acide méthacryloylbenzène boronique, l'acide vinyl-4 benzène boronique, l'acide 3-acrylamido phényl boronique, l'acide 3-méthacrylamido phényl boronique, seuls ou en mélanges, ou sous forme de sels,
- les monomères comprenant des phosphonates, choisis par exemple parmi les dérivés N-methacrylamidomethylphosphonic acid esters, en particulier l'ester n-propylique (RN 31857-11-1), l'ester méthylique (RN 31857-12-2), l'ester éthylique (RN 31857-13-3), l'ester n-butylique (RN 31857-14-4), l'ester isopropylique (RN 51239-00-0), ainsi que leurs dérivés monoacide et diacide phosphonique, tel le N-methacrylamidomethylphosphonic diacid (RN 109421-20-7) ; les dérivés N-methacrylamidoethylphosphonic acid esters, tel le N-methacrylamidoethyl phosphonic acid dimethyl ester (RN 266356-40-5), le N-methacrylamidoethyl phosphonic acid di(2-butyl-3,3-dimethyl) ester (RN 266356-45-0), ainsi que leurs dérivés monoacide et diacide phosphonique, tel le N-methacrylamidoethylphosphonic diacid (RN 80730-17-2) ; les dérivés N-acrylamidomethylphosphonic acid esters tels le N-acrylamidomethyl phosphonic acid dimethyl ester (RN 24610-95-5), le N-acrylamidomethyl phosphonic acid diethyl ester (RN 24610-96-6), le bis(2-chloropropyl) N-acrylamidomethyl phosphonate (RN 50283-36-8), ainsi que leurs dérivés monoacide et diacide phosphonique tel le N-acrylamidomethyl phosphonic acid (RN 151752-38-4) ; les dérivés vinylbenzylphosphonate dialkyl ester, en particulier les dérivés di(n-propyl) (RN 60181-26-2), di(isopropyl) (RN 159358-34-6), diethyl (RN 726-61-4), dimethyl (RN 266356-24-5), di(2-butyl-3,3-dimethyl) (RN 266356-29-0) et di (t-butyl) ester (RN 159358-33-5), ainsi que leurs variantes monoacide et diacide phosphonique, tel le vinylbenzylphosphonic diacid (RN 53459-43-1) ; le diéthyl 2-(4-vinylphenyl)ethanephosphonate (RN 61737-88-0); les dérivés dialkylphosphonoalkyl acrylates et méthacrylates, tel le 2-(acryloyloxy)ethylphosphonic acid dimethyl ester (RN 54731-78-1) et le 2-(methacryloyloxy)ethylphosphonic acid dimethyl ester (RN 22432-83-3), le 2-(methacryloyloxy)methylphosphonic acid diethyl ester (RN 60161-88-8), le 2-(methacryloyloxy)methylphosphonic acid dimethyl ester (RN 63411-25-6), le 2-(methacryloyloxy)propylphosphonic acid dimethyl ester (RN 252210-28-9), le 2-(acryloyloxy)methylphosphonic acid diisopropyl ester (RN 51238-98-3), le 2-(acryloyloxy) ethylphosphonic acid diethyl ester (RN 20903-86-0), ainsi que leurs variantes monoacide et diacide phosphonique, tel le 2-(methacryloyloxy)ethylphosphonic acid (RN 80730-17-2), le 2-(methacryloyloxy)methylphosphonic acid (RN 87243-97-8), le 2-(methacryloyloxy)propylphosphonic acid (RN 252210-30-3), le 2-(acryloyloxy)propylphosphonic acid (RN 254103-47-4) et le 2-(acryloyloxy)ethylphosphonic acid ; l'acide vinyl phosphonique, éventuellement substitué par des groupements cyano, phényle, ester ou acétate, l'acide vinylidene phosphonique, sous forme de sel de sodium ou son ester isopropylique, le vinylphosphonate de bis(2-chloroéthyle), ces monomères à fonction mono ou diacide phosphonique pouvant être utilisés sous forme neutralisée, partiellement ou totalement, éventuellement par une amine, par exemple la dicyclohexylamine,
- les monomères choisis parmi les analogues phosphates des monomères phosphonatés décrits ci-dessus, les monomères comportant alors un enchaînement -C-O-P- comparativement à l'enchaînement -C-P- des phosphonates, et
- Les monomères porteurs d'un groupe alcoxysilane choisi parmi le méthacrylate de triméthoxysilylpropyle, le méthacrylate de triéthoxysilylpropyle, le méthacrylate de tributoxysilylpropyle, le méthacrylate de diméthoxyméthylsilylpropyle, le méthacrylate de diéthoxyméthylsilylpropyle, le méthacrylate de dibutoxyméthylsilylpropyle, le méthacrylate de diisopropoxyméthylsilylpropyle, le méthacrylate de diméthoxysilylpropyle, le méthacrylate de diéthoxysilylpropyle, le méthacrylate de dibutoxysilylpropyle, le méthacrylate de diisopropoxysilylpropyle, le méthacrylate de triméthoxysilylpropyle, le méthacrylate de triéthoxysilylpropyle, le méthacrylate de tributoxysilylpropyle, l'acrylate de triméthoxysilylpropyle, l'acrylate de triéthoxysilylpropyle, l'acrylate de tributoxysilylpropyle, l'acrylate de diméthoxyméthylsilylpropyle, l'acrylate de diéthoxyméthylsilylpropyle, l'acrylate de dibutoxyméthylsilylpropyle, l'acrylate de diisopropoxyméthylsilylpropyle, l'acrylate de diméthoxysilylpropyle, l'acrylate de diéthoxysilylpropyle, l'acrylate de dibutoxysilylpropyle, l'acrylate de diisopropoxysilylpropyle, l'acrylate de triméthoxysilylpropyle, l'acrylate de triéthoxysilylpropyle, ou l'acrylate de tributoxysilylpropyle.

3. Procédé selon la revendication 2, **caractérisé en ce que** le monomère monoéthyléniquement insaturé est choisi parmi les monomères styréniques, les esters vinyliques, les acrylates hydrophiles neutres ou chargés, les acrylates hydrophobes, les méthacrylates hydrophiles neutres ou chargés, les méthacrylates hydrophobes, les acrylamido hydrophiles, hydrophobes, neutres ou chargés, les méthacrylamido hydrophiles, hydrophobes, neutres ou chargés.

4. Procédé selon l'une quelconque des revendications 1 à 3, **caractérisé en ce que** le monomère multiéthyléniquement insaturé est choisi parmi des composés organiques réactifs par voie radicalaire comportant au moins deux insaturations éthyléniques et au plus 10 insaturations éthyléniques.

5. Procédé selon l'une quelconque des revendications 1 à 4, **caractérisé en ce que** le monomère multiéthyléniquement insaturé est choisi parmi les dérivés acryliques, méthacryliques, acrylamido, méthacrylamido, ester vinylique, éther vinylique, diénique, styrénique, alpha-méthyl styrénique et allylique.

6. Procédé selon l'une quelconque des revendications 1 à 5, **caractérisé en ce que** le monomère multiéthyléniquement insaturé comprend en outre un ou plusieurs groupements fonctionnels autres que les insaturations éthyléniques choisis parmi les fonctions hydroxyle, carboxyle, ester, amide, amino ou amino substitués, mercapto, silane, epoxy ou halogéno.

7. Procédé selon l'une quelconque des revendications 1 à 6, **caractérisé en ce que** le monomère multiéthyléniquement insaturé est choisi parmi le divinylbenzène et les dérivés du divinylbenzène, le méthacrylate de vinyle, l'anhydride d'acide méthacrylique, le méthacrylate d'allyle, le diméthacrylate d'éthylèneglycol, le phénylène diméthacrylate, le diméthacrylate de diéthylène glycol, le diméthacrylate de triéthylène glycol, le diméthacrylate de tétraéthylène glycol, le diméthacrylate de polyéthylène glycol 200, le diméthacrylate de polyéthylène glycol 400, le 1,3-diméthacrylate de butanediol, le 1,4-diméthacrylate de butanediol, le 1,6-diméthacrylate de hexanediol, le 1,12-diméthacrylate de dodécanediol, le 1,3-diméthacrylate de glycérol, le diméthacrylate de diuréthane, le triméthacrylate de triméthylolpropane ; l'acrylate de vinyle, le diacrylate de bisphénol A époxy, le diacrylate de dipropylèneglycol, le diacrylate de tripropylèneglycol, le diacrylate de polyéthylène glycol 600, le diacrylate d'éthylène glycol, le diacrylate de diéthylène glycol, le diacrylate de triéthylène glycol, le diacrylate de tetraéthylène glycol, le diacrylate de néopentyl glycol éthoxylé, le diacrylate de butanédiol, le diacrylate d'hexanediol, le diacrylate d'uréthane aliphatique, le triacrylate de triméthylolpropane, le triacrylate de triméthylolpropane éthoxylé, le titacrylate de triméthylolpropane propoxylé, le triacrylate de glycérol propoxylé, le triacrylate d'uréthane aliphatique, le tétraacrylate de triméthylolpropane, le pentaacrylate de dipentaérytritol ;le vinyl crotonate, le diéthylène glycoldivinyléther, l'ether divinylique de butanediol-1,4, le triéthylèneglycol divinyl éther ; le diallyl phtalate, le diallyldiméthylammonium chloride, le diallyl malléate, le sodium diallyloxyacetate, le diallylphenylphosphine, le diallylpyrocarbonate, le diallyl succinate, le N,N'-diallyltartardiamide, le N,N-diallyl-2,2,2-trifluoroacétamide, l'ester allylique du diallyloxy acide acétique, le 1,3-diallylurée, la triallylamine, le triallyl trimesate, le triallyl cyanurate, le triallyl trimellitate, le triallyl-1,3,5-triazine-2,4,6(1H, 3H, 5H)-trione ; le N,N'-méthylènebisacrylamide, le N,N'-méthylènebismethacrylamide, le glyoxal bisacrylamide, le diacrylamido acide acétique ; le divinylbenzène et le 1,3-diisopropénylbenzène ; le butadiène, le chloroprène ou l'isoprène,

8. Procédé selon l'une quelconque des revendications 1 à 7, **caractérisé en ce que** le monomère multiéthyléniquement insaturé est choisi parmi le N,N'-méthylènebisacrylamide, le divinylbenzène, le diacrylate d'éthylène glycol, ou le triacrylate de triméthylolpropane.

9. Procédé selon l'une quelconque des revendications 1 à 8, **caractérisé en ce que** la fraction molaire de monomères multiéthyléniquement insaturés par rapport aux monomères monoéthyléniquement insaturés est comprise entre 0,001 et 1.

10. Procédé selon la revendication 9, **caractérisé en ce que** la fraction molaire de monomères multiéthyléniquement insaturés par rapport aux monomères monoéthyléniquement insaturés est comprise entre 0,01 et 1.

11. Procédé selon l'une des revendications précédente, **caractérisé en ce que** la polymérisation radicalaire contrôlée est effectuée selon un procédé de transfert réversible par addition-fragmentation de composés thiocarbonylthio.

12. Procédé selon la revendication 11, **caractérisé en ce que** les composés thiocarbonylthio sont des composés de formule (A) ou (B) suivante : 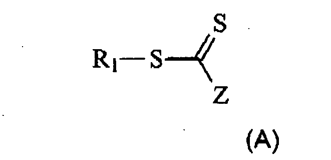 dans laquelle :
- Z représente :
. un atome d'hydrogène,
. un atome de Chlore,
. un radical alkyl éventuellement substitué, aryl éventuellement substitué,
. un hétérocycle éventuellement substitué,
. un radical alkylthio éventuellement substitué;
. un radical arylthio éventuellement substitué,
. un radical alkoxy éventuellement substitué,
. un radical aryloxy éventuellement substitué,
. un radical amino éventuellement substitué,
. un radical hydrazine éventuellement substitué,
. un radical alkoxycarbonyl éventuellement substitué,
. un radical aryloxycarbonyl éventuellement substitué,
. un radical carboxy, acyloxy éventuellement substitué,
. un radical aroyloxy éventuellement substitué,
. un radical carbamoyle éventuellement substitué,
. un radical cyano,
. un radical dialkyl- ou diaryl-phosphonato,
. un radical dialkyl-phosphinato ou diaryl-phosphinato, ou
. une chaîne polymère,
- R₁ représente :
. un groupe alkyle, acyle, aryle, aralkyle, alcène ou alcyne éventuellement substitué,
. un cycle carboné ou un hétérocycle, saturé ou non, aromatique éventuellement substitué, ou
. une chaîne polymère.

13. Procédé selon la revendication 11, **caractérisé en ce que** les composés thiocarbonylthio sont des composés xanthates, dithiocarbamates, dithioesters porteurs d'une seule fonction de formule -S(C=S)-.

14. Procédé selon la revendication 13, **caractérisé en ce que** les composés sont des xanthates.

15. Procédé de préparation de microgels statistiques dits de n-ième génération, n étant un nombre entier compris entre 2 et 50 qui comprend les étapes suivantes :
1) on met en oeuvre le procédé de préparation du microgel de (n-1)-ième génération selon l'une quelconque des revendications 1 à 14,
2) on ajoute au microgel obtenu à l'étape 1 au moins un monomère mono ou multi éthyléniquement insaturé en présence d'un activateur.

16. Procédé selon l'une quelconque des revendications 1 à 15 **caractérisée en ce que** l'activateur est une source de radicaux libre.

17. Procédé de préparation de microgels statistiques dits de première génération qui comprend une étape de polymérisation radicalaire contrôlée d'une composition comprenant :
- au moins un monomère monoéthyléniquement insaturé,
- au moins un monomère multiéthyléniquement insaturé,
- une source de radicaux libres, et
- un agent de contrôle
**caractérisé en ce que** la polymérisation radicalaire contrôlée est effectuée selon un procédé de transfert réversible par addition-fragmentation de composés thiocarbonylthio.

18. Procédé selon la revendication 17, **caractérisé en ce que** les composés thiocarbonylthio sont tels que définis dans l'une des revendications 12 à 14.

19. Procédé selon l'une des revendications 17 ou 18, **caractérisé en ce que** le monomère monoéthyléniquement insaturé est tel que défini dans l'une des revendications 2 ou 3.

20. Procédé selon l'une des revendications 17 à 19, **caractérisé en ce que** le monomère multiéthyténiquement insaturé est tel que déini dans l'une des revendications 4 à 10.

## Claims

1. A process for the preparation of "second-generation" random microgels, which comprises the following stages:
1) a process for the preparation of the first generation microgel is carried out, which comprises a stage of controlled radical polymerization according to a process of Atom Transfer Radical Polymerization (ATRP) type or by a reversible transfer by addition fragmentation of thiocarbonylthio compounds, of a composition comprising:
- at least one monoethylenically unsaturated monomer,
- at least one polyethylenically unsaturated monomer,
- a source of free radicals, and
- a control agent,
2) at least one mono- or polyethylenically unsaturated monomer is added to the microgel obtained in stage 1 in the presence of an activator.

2. The process as claimed in claim 1, **characterized in that** the monoethylenically unsaturated monomer is chosen from:
- styrene and styrene derivatives, such as α-methylstyrene or vinyltoluene,
- carboxylic acid vinyl esters, such as vinyl acetate, vinyl Versatate® or vinyl propionate,
- vinyl and vinylidene halides,
- unsaturated ethylenic mono- and dicarboxylic acids, such as acrylic acid, methacrylic acid, itaconic acid, maleic acid or fumaric acid, and the monoalkyl esters of the dicarboxylic acids of the type mentioned with alkanols preferably having 1 to 4 carbon atoms and their N-substituted derivatives,
- amides of unsaturated carboxylic acids, such as acrylamide, methacrylamide, N-methylolacrylamide, N-methylolmethacrylamide or N-alkylacrylamides,
- ethylenic monomers comprising a sulfonic acid group and its alkali metal or ammonium salts, for example vinylsulfonic acid, vinylbenzenesulfonic acid, α-acrylamidomethylpropanesulfonic acid or 2-sulfoethylene methacrylate,
- aides of vinylamine, in particular vinylformamide, vinylacetamide, N-vinylpyrrolidone and N-vinylcaprolactam,
- unsaturated ethylenic monomers comprising a secondary, tertiary or quaternary amino group or a heterocyclic group comprising nitrogen, such as, for example, vinylpyridines, vinylimidazole, aminoalkyl (meth)acrylates and aminoalkyl(meth)acrylamides, such as dimethylaminoethyl acrylate, dimethylaminoethyl methacrylate, di(tert-butyl)aminoethyl acrylate, di(tert-butyl)aminoethyl methacrylate, dimethylaminomethylacrylamide or dimethylamino-methylmethacrylamide, or zwitterionic monomers, such as, for example, sulfopropyl(dimethyl)-aminopropyl acrylate,
- (meth)acrylic esters, such as glycidyl acrylate or glycidyl methacrylate,
- vinyl nitriles,
- monomers comprising at least one boronate functional group or one precursor, for example chosen from acryloylbenzeneboronic acid, methacryloylbenzeneboronic acid, 4-vinylbenzeneboronic acid, 3-acrylamidophenylboronic acid or 3-methacrylamidophenylboronic acid, alone or as mixtures, or in the form of salts,
- monomers comprising phosphonates, for example chosen from N-methacrylamidomethylphosphonic acid ester derivatives, in particular the n-propyl ester (RN 31857-11-1), the methyl ester (RN 31857-12-2), the ethyl ester (RN 31857-13-3), the n-butyl ester (RN 31857-14-4) or the isopropyl ester (RN 51239-00-0), and their phosphonic monoacid and diacid derivatives, such as N-methacrylamidomethylphosphonic diacid (RN 109421-20-7); N-methacrylamidoethylphosphonic acid ester derivatives, such as N-methacrylamidoethylphosphonic acid dimethyl ester (RN 266356-40-5) or N-methacrylamidoethylphosphonic acid di(2-butyl-3,3-dimethyl) ester (RN 266356-45-0), and their phosphonic monoacid and diacid derivatives, such as N-methacrylamidoethylphosphonic diacid (RN 80730-17-2); N-acrylamidomethylphosphonic acid ester derivatives, such as N-acrylamidomethylphosphonic acid dimethyl ester (RN 24610-95-5), N-acrylamidomethylphosphonic acid diethyl ester (RN 24610-96-6) or bis(2-chloropropyl) N-acrylamidomethylphosphonate (RN 50283-36-8), and their phosphonic monoacid and diacid derivatives, such as N-acrylamidomethylphosphonic acid (RN 151752-38-4); the vinylbenzylphosphonate dialkyl ester derivatives, in particular the di(n-propyl) (RN 60181-26-2), di(isopropyl) (RN 159358-34-6), diethyl (RN 726-61-4), dimethyl (RN 266356-24-5), di(2-butyl-3,3-dimethyl) (RN 266356-29-0) and di(t-butyl) (RN 159358-33-5) ester derivatives, and their phosphonic monoacid and diacid alternative forms, such as vinylbenzylphosphonic diacid (RN 53459-43-1); diethyl 2-(4-vinylphenyl)ethanephosphonate (RN 61737-88-0); dialkylphosphonoalkyl acrylate and methacrylate derivatives, such as 2-(acryloyloxy)ethylphosphonic acid dimethyl ester (RN 54731-78-1) and 2-(methacryloyloxy)ethylphosphonic acid dimethyl ester (RN 22432-83-3), 2-(methacryloyloxy)methylphosphonic acid diethyl ester (RN 60161-88-8), 2-(methacryloyloxy)methylphosphonic acid dimethyl ester (RN 63411-25-6), 2-(methacryloyloxy)propylphosphonic acid dimethyl ester (RN 252210-28-9), 2-(acryloyloxy)methylphosphonic acid diisopropyl ester (RN 51238-98-3) or 2-(acryloyloxy)ethylphosphonic acid diethyl ester (RN 20903-86-0), and their phosphonic monoacid and diacid alternative forms, such as 2-(methacryloyloxy)ethylphosphonic acid (RN 80730-17-2), 2-(methacryloyloxy)methylphosphonic acid (RN 87243-97-8), 2-(methacryloyloxy)propylphosphonic acid (RN 252210-30-3), 2-(acryloyloxy)propylphosphonic acid (RN 254103-47-4) and 2-(acryloyloxy)ethylphosphonic acid; vinylphosphonic acid, optionally substituted by cyano, phenyl, ester or acetate groups, vinylidenephosphonic acid, in the sodium salt form or the form of its isopropyl ester, or bis (2-chloroethyl)vinylphosphonate, it being possible for these monomers comprising a phosphonic mono- or diacid functional group to be used in the partially or completely neutralized form, optionally neutralized by an amine, for example dicyclohexylamine,
- monomers chosen from the phosphate analogs of the phosphonate-comprising monomers described above, the monomers then comprising a -C-O-P- sequence in comparison with the -C-P- sequence of the phosphonates, and
- monomers carrying an alkoxysilane group chosen from trimethoxysilypropyl methacrylate, triethoxysilylpropyl methacrylate, tributoxysilylpropyl methacrylate, dimethoxymethylsilylpropyl methacrylate, diethoxymethylsilylpropyl methacrylate, dibutoxymethylsilylpropyl methacrylate, diisopropoxymethylsilylpropyl methacrylate, dimethoxysilylpropyl methacrylate, diethoxysilylpropyl methacrylate, dibutoxysilylpropyl methacrylate, diisopropoxysilylpropyl methacrylate, trimethoxysilylpropyl methacrylate, triethoxysilylpropyl methacrylate, tributoxysilylpropyl methacrylate, trimethoxysilypropyl acrylate, triethoxysilylpropyl acrylate, tributoxysilylpropyl acrylate, dimethoxymethylsilylpropyl acrylate, diethoxymethylsilylpropyl acrylate, dibutoxymethylsilylpropyl acrylate, diisopropoxymethylsilylpropyl acrylate, dimethoxysilylpropyl acrylate, diethoxysilylpropyl acrylate, dibutoxysilylpropyl acrylate, diisopropoxysilylpropyl acrylate, trimethoxysilylpropyl acrylate, triethoxysilylpropyl acrylate or tributoxysilylpropyl acrylate.

3. The process as claimed in claim 2, **characterized in that** the monoethylenically unsaturated monomer is chosen from styrene monomers, vinyl esters, neutral or charged hydrophilic acrylates, hydrophobic acrylates, neutral or charged hydrophilic methacrylates, hydrophobic methacrylates, hydrophilic or hydrophobic and neutral or charged acrylamido derivatives or hydrophilic or hydrophobic and neutral or charged methacrylamido derivatives.

4. The process as claimed in any one of claims 1 to 3,
**characterized in that** the polyethylenically unsaturated monomer is chosen from organic compounds reactive by the radical route comprising at least two ethylenic unsaturations and at most 10 ethylenic unsaturations.

5. The process as claimed in any one of claims 1 to 4,
**characterized in that** the polyethylenically unsaturated monomer is chosen from acrylic, methacrylic, acrylamido, methacrylamido, vinyl ester, vinyl ether, diene, styrene, α-methylstyrene and allyl derivatives.

6. The process as claimed in any one of claims 1 to 5,
**characterized in that** the polyethylenically unsaturated monomer additionally comprises one or more functional groups other than ethylenic unsaturations chosen from the hydroxyl, carboxyl, ester, amide, amino, substituted amino, mercapto, silane, epoxy or halo functional groups.

7. The process as claimed in any one of claims 1 to 6,
**characterized in that** the polyethylenically unsaturated monomer is chosen from divinylbenzene and divinylbenzene derivatives, vinyl methacrylate, methacrylic acid anhydride, allyl methacrylate, ethylene glycol dimethacrylate, phenylene dimethacrylate, diethylene glycol dimethacrylate, triethylene glycol dimethacrylate, tetraethylene glycol dimethacrylate, polyethylene glycol 200 dimethacrylate, polyethylene glycol 400 dimethacrylate, 1,3-butanediol dimethacrylate, 1,4-butanediol dimethacrylate, 1,6-hexanediol dimethacrylate, 1,12-dodecanediol dimethacrylate, 1,3-glycerol dimethacrylate, diurethane dimethacrylate or trimethylolpropane trimethacrylate; vinyl acrylate, bisphenol A epoxy diacrylate, dipropylene glycol diacrylate, tripropylene glycol diacrylate, polyethylene glycol 600 diacrylate, ethylene glycol diacrylate, diethylene glycol diacrylate, triethylene glycol diacrylate, tetraethylene glycol diacrylate, neopentyl glycol ethoxylate diacrylate, butanediol diacrylate, hexanediol diacrylate, aliphatic urethane diacrylate, trimethylolpropane triacrylate, trimethylolpropane ethoxylate triacrylate, trimethylolpropane propoxylate triacrylate, glycerol propoxylate triacrylate, aliphatic urethane triacrylate, trimethylolpropane tetraacrylate or dipentaerythritol pentaacrylate; vinyl crotonate, diethylene glycol divinyl ether, 1,4-butanediol divinyl ether or triethylene glycol divinyl ether; diallyl phthalate, diallyldimethylammonium chloride, diallyl maleate, sodium diallyloxyacetate, diallylphenylphosphine, diallyl pyrocarbonate, diallyl succinate, N,N'-diallyltartardiamide, N,N-diallyl-2,2,2-trifluoroacetamide, the allyl ester of diallyloxyacetic acid, 1,3-diallylurea, triallylamine, triallyl trimesate, triallyl cyanurate, triallyl trimellitate or 1,3,5-triallyltriazine-2,4,6(1H,3H,5H)-trione; N,N'-methylenebisacrylamide, N,N'-methylenebis-methacrylamide, glyoxalbisacrylamide or diacrylamidoacetic acid; divinylbenzene and 1,3-diisopropenylbenzene; butadiene, chloroprene or isoprene.

8. The process as claimed in any one of claims 1 to 7, **characterized in that** the polyethylenically unsaturated monomer is chosen from N,N'-methylenebisacrylamide, divinylbenzene, ethylene glycol diacrylate or trimethylolpropane triacrylate.

9. The process as claimed in any one of claims 1 to 8, **characterized in that** the molar fraction of polyethylenically unsaturated monomers with respect to the monoethylenically unsaturated monomers is between 0.001 and 1.

10. The process as claimed in claim 9, **characterized in that** the molar fraction of polyethylenically unsaturated monomers with respect to the monoethylenically unsaturated monomers is between 0.01 and 1.

11. The process as claimed in any one of the preceding claims, **characterized in that** the controlled radical polymerization is carried out according to a reversible transfer by addition-fragmentation of thiocarbonylthio compounds process.

12. The process as claimed in claim 11, **characterized in that** the thiocarbonylthio compounds are compounds of following formula (A): 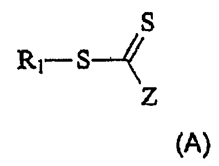 in which:
- Z represents:
. a hydrogen atom,
. a chlorine atom,
. an optionally substituted alkyl radical or an optionally substituted aryl radical,
. an optionally substituted heterocycle,
. an optionally substituted alkylthio radical,
. an optionally substituted arylthio radical,
. an optionally substituted alkoxy radical,
. an optionally substituted aryloxy radical,
. an optionally substituted amino radical,
. an optionally substituted hydrazine radical,
. an optionally substituted alkoxycarbonyl radical,
. an optionally substituted aryloxycarbonyl radical,
. a carboxyl or optionally substituted acyloxy radical,
. an optionally substituted aroyloxy radical,
. an optionally substituted carbamoyl radical,
. a cyano radical,
. a dialkyl- or diaryl-phosphonato radical,
. a dialkyl-phosphinato or diaryl-phosphinato radical, or
. a polymer chain,
- R₁ represents:
. an optionally substituted alkyl, acyl, aryl, aralkyl, alkenyl or alkynyl group,
. an optionally substituted, aromatic, saturated or unsaturated, carbon ring or heterocycle, or
. a polymer chain.

13. The process as claimed in claim 11, **characterized in that** the thiocarbonylthio compounds are xanthate, dithiocarbamate or dithioester compounds carrying a single functional group of formula -S(C=S)-.

14. The process as claimed in claim 13, **characterized in that** the compounds are xanthates.

15. A process for the preparation of "nth-generation" random microgels, n being an integer between 2 and 50, which comprises the following stages:
1) the process for the preparation of the (n-1)th-generation microgel as claimed in any one of claims 1 to 14 is carried out,
2) at least one mono- or polyethylenically unsaturated monomer is added to the microgel obtained in stage n-1 in the presence of an activator.

16. The process as claimed in either one of claims 1 to 15, **characterized in that** the activator is a source of free radicals.

17. A process for the preparation of "first-generation" random microgels which comprises a stage of controlled radical polymerization of a composition comprising:
- at least one monoethylenically unsaturated monomer,
- at least one polyethylenically unsaturated monomer,
- a source of free radicals, and
- a control agent,
**characterized in that** the controlled radical polymerization is carried out according to a reversible transfer by addition fragmentation of thiocarbonylthio compounds process.

18. The process as claimed in claim 17, **characterized in that** the thiocarbonylthio compounds are as deifned in one of claims 12 to 14.

19. The process as claimed in claims 17 or 18,
**characterized in that** the monoethylenically unsaturated monomer is as defined in one of claims 2 or 3.

20. The process as claims in either one of claims 17 to 19, **characterized in that** the polyethylenically unsaturated monomer is as defined in one of claims 4 to 10.

## Patentansprüche

1. Verfahren zur Herstellung von sogenannten statistischen Mikrogelen der zweiten Generation, welches die folgenden Schritte umfasst:
1) man führt ein Verfahren zur Herstellung des Mikrogels der ersten Generation aus, welches einen Schritt einer kontrollierten radikalischen Polymerisation einer Zusammensetzung, umfassend:
- mindestens ein einfach ethylenisch ungesättigtes Monomer,
- mindestens ein mehrfach ethylenisch ungesättigtes Monomer,
- eine Quelle von freien Radikalen und
- ein Steuerungsmittel,
gemäß einem Verfahren vom Typ "Atom Transfer Radical Polymerzation" (ATRP) oder durch ein Verfahren eines reversiblen Transfers durch Addition-Fragmentierung von Thiocarbonylthio-Verbindungen umfasst;
2) man setzt zu dem in dem Schritt 1 erhaltenen Mikrogel mindestens ein einfach oder mehrfach ethylenisch ungesättigtes Monomer in Gegenwart eines Aktivators zu.

2. Verfahren nach Anspruch 1, **dadurch gekennzeichnet, dass** das einfach ethylenisch ungesättigte Monomer ausgewählt ist unter:
- Styrol und den Derivaten von Styrol, wie alpha-Methylstyrol oder Vinyltoluol;
- den vinylischen Estern von Carbonsäuren, wie Vinylacetat, Vinylversatat^{®}, Vinylpropionat,
- den Vinyl- und Vinylidenhalogeniden,
- den ethylenisch ungesättigten Mono- und Dicarbonsäuren, wie Acrylsäure, Methacrylsäure, Itaconsäure, Maleinsäure, Fumarsäure, und den Monoalkylestern der Dicarbonsäuren vom erwähnten Typ mit Alkanolen, die vorzugsweise 1 bis 4 Kohlenstoffatome aufweisen, und deren N-substituierten Derivaten,
- den Amiden von ungesättigten Carbonsäuren, wie Acrylamid, Methacrylamid, N-Methylolacrylamid oder -methacrylamid, die N-Alkylacrylamide,
- den ethylenischen Monomeren, welche eine Sulfonsäuregruppe umfassen, und deren Alkalimetall- oder Ammoniumsalzen, beispielsweise Vinylsulfonsäure, Vinylbenzolsulfonsäure, alpha-Acrylamidomethylpropansulfonsäure, 2-Sulfoethylenmethacrylat,
- den Amiden von Vinylamin, insbesondere Vinylformamid, Vinylacetamid, N-Vinylpyrrolidon und N-Vinylcaprolactam,
- den ethylenisch ungesättigten Monomeren, welche eine sekundäre, tertiäre oder quartäre Aminogruppe oder eine Stickstoff enthaltende heterocyclische Gruppe umfassen, wie beispielsweise die Vinylpyridine, Vinylimidazol, die Aminoalkyl(meth)acrylate und die Aminoalkyl(meth)acrylamide, wie Dimethylaminoethylacrylat oder
- methacrylat, Di-tert.-butylaminoethylacrylat oder -methacrylat, Dimethylaminomethylacrylamid oder -methacrylamid, oder zwitterionischen Monomeren, wie beispielsweise Sulfopropyl(dimethyl)aminopropylacrylat,
- den (Meth)acrylsäureestern, wie Glycidylacrylat oder Glycidylmethacrylat,
- den Vinylnitrilen,
- den Monomeren, welche mindestens eine Boronat-Funktion oder eine Vorstufe umfassen, die beispielsweise unter Acryloylbenzolboronsäure, Methacryloylbenzolboronsäure, Vinyl-4-benzolboronsäure, 3-Acrylamidophenylboronsäure, 3-Methacrylamidophenylboronsäure ausgewählt sind, allein oder in Mischungen oder in Form von Salzen,
- den Monomeren, welche Phosphonate umfassen, welche beispielsweise unter den N-Methacrylamidomethylphosphonsäureester-Derivaten ausgewählt sind, insbesondere der N-Propylester (RN 31857-11-1), der Methylester (RN 31857-12-2), der Ethylester (RN 31857-13-3), der n-Butylester (RN 31857-14-4), der Isopropylester (RN 51239-00-0), wie auch deren Mono- und Diphosphonsäure-Derivaten, wie N-Methacrylamidomethylphosphondisäure (RN 109421-20-7); den N-Methacrylamidoethylphosphonsäureester-Derivaten, wie dem N-Methacrylamidoethylphosphonsäuredimethylester (RN 266356-40-5), dem N-Methacrylamidoethylphosphonsäure-di(2-butyl-3,3-dimethyl)ester (RN 266356-45-0), wie auch deren Mono- und Diphosphonsäure-Derivaten, wie N-Methacrylamidoethylphosphondisäure (RN 80730-17-2); den N-Acrylamidomethylphosphonsäureestern, wie dem N-Acrylamidomethylphosphonsäuredimethylester (RN 24610-95-5), dem N-Acrylamidomethylphosphonsäurediethylester (RN 24610-96-6), dem Bis(2-chlorpropyl)-N-acrylamidomethylphosphonat (RN 50283-36-8), wie auch deren Mono- und Diphosphonsäurederivaten, wie N-Acrylamidomethylphosphonsäure (RN 151752-38-4); den Vinylbenzylphosphonatdialkylester-Derivaten, insbesondere den Di(n-propyl)ester-Derivaten (RN 60181-26-2), Di(isopropyl)ester-Derivaten (RN 159358-34-6), Diethylester-Derivaten (RN 726-61-4), Dimethylester-Derivaten (RN 266356-24-5), Di(2-butyl-3,3-dimethyl)ester-Derivaten (RN 266356-29-0) und Di(tert.-butyl)ester-Derivaten (RN 159358-33-5) wie auch deren Mono- und Diphosphonsäure-Varianten, wie Vinylbenzylphosphondisäure (RN 53459-43-1); Diethyl-2-(4-vinylphenyl)ethanphosphonat (RN 61737-88-0); den Dialkylphosphonoalkylacrylat- und -methacrylat-Derivaten, wie dem 2-(Acryloyloxy)ethyl-phosphonsäuredimethylester (RN 54731-78-1) und dem 2-(Methacryloyloxy)ethyl-phosphonsäuredimethylester (RN 22432-83-3), dem 2-(Methacryloyloxy)methyl-phosphonsäurediethylester (RN 60161-88-8), dem 2-(Methacryloyloxy)methyl-phosphonsäuredimethylester (RN 63411-25-6), dem 2-(Methacryloyloxy)propyl-phosphonsäuredimethylester (RN 252210-28-9), dem 2-(Acryloyloxy)methylphos-phonsäurediisopropylester (RN 51238-98-3), dem 2-(Acryloyloxy)ethylphosphon-säurediethylester (RN 20903-86-0), wie auch deren Mono- und Diphosphonsäure-Varianten, wie 2-(Methacryloyloxy)ethylphosphonsäure (RN 80730-17-2), 2-(Meth-acryloyloxy)methylphosphonsäure (RN 87243-97-8), 2-(Methacryloyloxy)propylphos-phonsäure (RN 252210-30-3), 2-(Acryloyloxy)propylphosphonsäure (RN 254103-47-4) und 2-(Acryloyloxy)ethylphosphonsäure; Vinylphosphonsäure, die gegebenenfalls durch Cyano-, Phenyl-, Ester- oder Acetatgruppen substituiert ist; Vinylidenphosphonsäure, in Form von Natriumsalz oder von deren Isopropylester, Bis(2-chlorethyl)vinylphosphonat, wobei diese Monomere mit Mono- oder Diphosphonsäure-Funktion in teilweise oder vollständig, gegebenenfalls durch ein Amin, beispielsweise Dicyclohexylamin, neutralisierter Form eingesetzt werden können,
- den Monomeren, die unter den Phosphat-Analoga der vorstehend beschriebenen Phosphonatgruppen aufweisenden Monomere ausgewählt sind, wobei die Monomere dann eine Kettenabfolge -C-O-P- verglichen mit der Kettenabfolge -C-P- der Phosphonate umfassen, und
- den Monomeren, die eine Alkoxysilangruppe tragen, die unter Trimethoxysilylpropylmethacrylat, Triethoxysilylpropylmethacrylat, Tributoxysilylpropylmethacrylat, Dimethoxymethylsilylpropylmethacrylat, Diethoxymethylsilylpropylmethacrylat, Dibutoxymethylsilylpropylmethacrylat, Diisopropoxymethylsilylpropylmethacrylat, Dimethoxysilylpropylmethacrylat, Diethoxysilylpropylmethacrylat, Dibutoxysilylpropylmethacrylat, Diisopropoxysilylpropylmethacrylat, Trimethoxysilylpropylmethacrylat, Triethoxysilylpropylmethacrylat, Tributoxysilylpropylmethacrylat, Trimethoxysilylpropylacrylat, Triethoxysilylpropylacrylat, Tributoxysilylpropylacrylat, Dimethoxymethylsilylpropylacrylat, Diethoxymethylsilylpropylacrylat, Dibutoxymethylsilylpropylacrylat, Diisopropoxymethylsilylpropylacrylat, Dimethoxysilylpropylacrylat, Diethoxysilylpropylacrylat, Dibutoxysilylpropylacrylat, Diisopropoxysilylpropylacrylat, Trimethoxysilylpropylacrylat, Triethoxysilylpropylacrylat oder Tributoxysilylpropylacrylat ausgewählt sind.

3. Verfahren nach Anspruch 2, **dadurch gekennzeichnet, dass** das einfach ethylenisch ungesättigte Monomer unter den styrolischen Monomeren, den vinylischen Estern, den neutralen oder geladenen hydrophilen Acrylaten, den hydrophoben Acrylaten, den neutralen oder geladenen hydrophilen Methacrylaten, den hydrophoben Methacrylaten, den hydrophilen, hydrophoben, neutralen oder geladenen Acrylamido-Verbindungen, den hydrophilen, hydrophoben, neutralen oder geladenen Methacrylamido-Verbindungen ausgewählt ist.

4. Verfahren nach einem der Ansprüche 1 bis 3, **dadurch gekennzeichnet**, das das mehrfach ethylenisch ungesättigte Monomer unter auf radikalischem Wege reaktiven organischen Verbindungen, welche mindestens zwei ethylenische Ungesättigtheiten und höchstens 10 ethylenische Ungesättigtheiten umfassen, ausgewählt ist.

5. Verfahren nach einem der Ansprüche 1 bis 4, **dadurch gekennzeichnet, dass** das mehrfach ethylenisch ungesättigte Monomer unter den acrylischen, methacrylischen, Acrylamido-, Methacrylamido-, Vinylester-, Vinylether-, dienischen, styrolischen, alpha-methylstyrolischen- und allylischen Derivaten ausgewählt ist.

6. Verfahren nach einem der Ansprüche 1 bis 5, **dadurch gekennzeichnet, dass** das mehrfach ethylenisch ungesättigte Monomer außerdem eine oder mehrere andere funktionelle Gruppen als die ethylenischen Ungesättigtheiten, die unter den Hydroxyl-, Carboxyl-, Ester-, Amid-, Amino- oder substituierten Amino-, Mercapto-, Silan-, Epoxy- oder Halogen-Funktionen ausgewählt sind, umfasst.

7. Verfahren nach einem der Ansprüche 1 bis 6, **dadurch gekennzeichnet, dass** das mehrfach ethylenisch ungesättigte Monomer unter Divinylbenzol und den Derivaten von Divinylbenzol, Vinylmethacrylat, Methacrylsäureanhydrid, Allylmethacrylat, Ethylenglycoldimethacrylat, Phenylendimethacrylat, Diethylenglycoldimethacrylat, Triethylenglycoldimethacrylat, Tetraethylenglycoldimethacrylat, Polyethylenglycol 200-dimethacrylat, Polyethylenglycol 400-dimethacrylat, Butandiol-1,3-dimethacrylat, Butandiol-1,4-dimethacrylat, Hexandiol-1,6-dimethacrylat, Dodecandiol-1,12-dimethacrylat, Glycerol-1,3-dimethacrylat, Diurethandimethacrylat, Trimethylolpropantrimethacrylat; Vinylacrylat, Bisphenol A-epoxydiacrylat, Dipropylenglycoldiacrylat, Tripropylenglycoldiacrylat, Polyethylenglycol 600-diacrylat, Ethylenglycoldiacrylat, Diethylenglycoldiacrylat, Triethylenglycoldiacrylat, Tetraethylenglycoldiacrylat, ethoxyliertem Neopentylglycoldiacrylat, Butandioldiacrylat, Hexandioldiacrylat, aliphatischem Urethandiacrylat, Trimethylolpropantriacrylat, ethoxyliertem Trimethylolpropantriacrylat, propoxyliertem Trimethylolpropantriacrylat, propoxyliertem Glyceroltriacrylat, aliphatischem Urethantriacrylat, Trimethylolpropantetraacrylat, Dipentaerytritolpentaacrylat; Vinylcrotonat, Diethylenglycoldivinylether, Butandiol-1,4-divinylether, Triethylenglycoldivinylether; Diallylphthalat, Diallyldimethylammoniumchlorid, Diallylmaleat, Natriumdiallyloxyacetat, Diallylphenylphosphin, Diallylpyrocarbonat, Diallylsuccinat, N,N'-Diallyltartardiamid, N,N-Diallyl-2,2,2-trifluoracetamid, dem Diallyloxyessigsäureallylester, 1,3-Diallylharnstoff, Triallylamin, Triallyltrimesat, Triallylcyanurat, Triallyltrimellitat, Triallyl-1,3,5-triazin-2,4,6-(1H,3H,5H)-trion; N,N'-Methylenbisacrylamid, N,N'-Methylenbismethacrylamid, Glyoxalbisacrylamid; Diacrylamidoessigsäure; Divinylbenzol und 1,3-Diisopropenylbenzol; Butadien, Chloropren oder Isopren ausgewählt ist.

8. Verfahren nach einem der Ansprüche 1 bis 7, **dadurch gekennzeichnet, dass** das mehrfach ethylenisch ungesättigte Monomer unter N,N'-Methylenbisacrylamid, Divinylbenzol, Ethylenglycoldiacrylat oder Trimethylolpropantriacrylat ausgewählt ist.

9. Verfahren nach einem der Ansprüche 1 bis 8, **dadurch gekennzeichnet, dass** der Molenbruch von mehrfach ethylenisch ungesättigten Monomeren in Bezug auf die einfach ethylenisch ungesättigten Monomere zwischen 0,001 und 1 eingeschlossen liegt.

10. Verfahren nach Anspruch 9, **dadurch gekennzeichnet, dass** der Molenbruch von mehrfach ethylenisch ungesättigten Monomeren in Bezug auf die einfach ethylenisch ungesättigten Monomere zwischen 0,01 und 1 eingeschlossen liegt.

11. Verfahren nach einem der vorangegangenen Ansprüche, **dadurch gekennzeichnet, dass** die kontrollierte radikalische Polymerisation gemäß einem Verfahren eines reversiblen Transfers durch Addition-Fragmentierung von Thiocarbonylthio-Verbindungen ausgeführt wird.

12. Verfahren nach Anspruch 11, **dadurch gekennzeichnet, dass** die Thiocarbonylthio-Verbindungen Verbindungen der folgenden Formel (A) oder (B) sind: 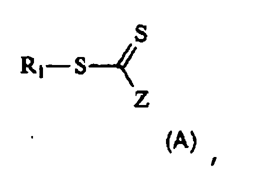 in welcher:
- Z für:
. ein Wasserstoffatom,
. ein Chloratom,
. einen gegebenenfalls substituierten Alkylrest, einen gegebenenfalls substituierten Arylrest,
. einen gegebenenfalls substituierten Heterocyclus,
. einen gegebenenfalls substituierten Alkylthiorest,
. einen gegebenenfalls substituierten Arylthiorest,
. einen gegebenenfalls substituierten Alkoxyrest,
. einen gegebenenfalls substituierten Aryloxyrest,
. einen gegebenenfalls substituierten Aminorest,
. einen gegebenenfalls substituierten Hydrazinrest,
. einen gegebenenfalls substituierten Alkoxycarbonylrest,
. einen gegebenenfalls substituierten Aryloxycarbonylrest,
. einen gegebenenfalls substituierten Carboxy-, Acyloxyrest,
. einen gegebenenfalls substituierten Aroyloxyrest,
. einen gegebenenfalls substituierten Carbamoylrest,
. einen Cyanorest,
. einen Dialkyl- oder Diarylphosphonatorest,
. einen Dialkylphosphinato- oder Diarylphosphinatorest oder
. eine Polymerkette steht,
- R₁ für:
. eine gegebenenfalls substituierte Alkyl-, Acyl-, Aryl-, Arylalkyl-, Alken- oder Alkingruppe,
. einen gesättigten oder nicht gesättigten, aromatischen, gegebenenfalls substituierten kohlenstoffhaltigen Cyclus oder Heterocyclus oder
. eine Polymerkette steht.

13. Verfahren nach Anspruch 11, **dadurch gekennzeichnet, dass** die Thiocarbonylthio-Verbindungen Xanthat-Verbindungen, Dithiocarbamat-Verbindungen, Dithioester-Verbindungen, die eine einzige Funktion der Formel -S(C=S)- tragen, sind.

14. Verfahren nach Anspruch 13, **dadurch gekennzeichnet, dass** die Verbindungen Xanthate sind.

15. Verfahren zur Herstellung von sogenannten statistischen Mikrogelen der n-ten Generation, wobei n eine ganze Zahl zwischen 2 und 50 eingeschlossen ist, welches die folgenden Schritte umfasst:
1) man führt das Verfahren zur Herstellung des Mikrogels der (n-1)-ten Generation nach einem der Ansprüche 1 bis 14 aus,
2) man setzt zu dem in dem Schritt 1 erhaltenen Mikrogel mindestens ein einfach oder mehrfach ethylenisch ungesättigtes Monomer in Gegenwart eines Aktivators zu.

16. Verfahren nach einem der Ansprüche 1 bis 15, **dadurch gekennzeichnet, dass** der Aktivator eine Quelle von freien Radikalen ist.

17. Verfahren zur Herstellung von sogenannten statistischen Mikrogelen der ersten Generation, welches einen Schritt einer kontrollierten radikalischen Polymerisation einer Zusammensetzung, umfassend:
- mindestens ein einfach ethylenisch ungesättigtes Monomer,
- mindestens ein mehrfach ethylenisch ungesättigtes Monomer,
- eine Quelle von freien Radikalen und
- ein Steuerungsmittel,
umfasst,
**dadurch gekennzeichnet, dass** die kontrollierte radikalische Polymerisation gemäß einem Verfahren eines reversiblen Transfers durch Addition-Fragmentierung von Thiocarbonylthio-Verbindungen ausgeführt wird.

18. Verfahren nach Anspruch 17, **dadurch gekennzeichnet, dass** die Thiocarbonylthio-Verbindungen derart sind, wie in einem der Ansprüche 12 bis 14 definiert.

19. Verfahren nach einem der Ansprüche 17 oder 18, **dadurch gekennzeichnet, dass** das einfach ethylenisch ungesättigte Monomer derart ist, wie in einem der Ansprüche 2 oder 3 definiert.

20. Verfahren nach einem der Ansprüche 17 bis 19, **dadurch gekennzeichnet, dass** das mehrfach ethylenisch ungesättigte Monomer derart ist, wie in einem der Ansprüche 4 bis 10 definiert.
